# FASCICULE DE BREVET EUROPEEN

(11) **EP 3 473 503 B1**
(45) Date de publication et mention de la délivrance du brevet: **16.12.2020**
(21) Numéro de dépôt: 18197480.9
(22) Date de dépôt: 28.09.2018
(51) Int. Cl.: B60S 1/40

(54) **ADAPTATEUR POUR UN ESSUIE-GLACE DE VÉHICULE AUTOMOBILE ET ESSUIE-GLACE COMPORTANT UN TEL ADAPTATEUR**
ADAPTER FÜR EINEN SCHEIBENWISCHER EINES KRAFTFAHRZEUGS, UND SCHEIBENWISCHER, DER EINEN SOLCHEN ADAPTER UMFASST
ADAPTER FOR A MOTOR VEHICLE WINDSCREEN WIPER AND WINDSCREEN WIPER COMPRISING SUCH AN ADAPTER

(30) Priorité: 20.10.2017 FR 1759925
(43) Date de publication de la demande: 24.04.2019
(73) Titulaire: Valeo Systèmes d'Essuyage, 78322 Le Mesnil Saint Denis (FR)
(72) Inventeur: POTON, Eric, 63500 ISSOIRE (FR); GAUCHER, Vincent, 63500 ISSOIRE (FR)
(74) Mandataire: Valeo Vision

(56) Documents cités:
- EP-A2- 2 505 440
- WO-A1-2006/106006
- FR-A1- 3 037 905

## Description

### DOMAINE TECHNIQUE DE L'INVENTION

L'invention concerne notamment un adaptateur pour un essuie-glace, en particulier de véhicule automobile.

L'invention concerne encore un ensemble comportant un bras d'essuie-glace et un adaptateur selon l'invention.

L'invention concerne également un balai d'essuie-glace de véhicule automobile comprenant une lame d'essuyage et un ensemble de connexion comportant un adaptateur selon l'invention.

### ARRIERE PLAN TECHNIQUE DE L'INVENTION

Un véhicule automobile est classiquement équipé d'essuie-glaces, notamment pour assurer un lavage de la surface extérieure du pare-brise et éviter ainsi que la vision qu'a le conducteur de son environnement ne soit perturbé.

Un essuie-glace comprend en général un bras d'entraînement, effectuant un mouvement de va-et-vient, notamment angulaire, et un balai d'essuie-glace allongé longitudinalement qui porte une lame d'essuyage ou lame racleuse réalisée en une matière élastique telle que du caoutchouc ou un matériau élastomère.

La lame d'essuyage frotte contre la surface extérieure du pare-brise et évacue l'eau en l'amenant en dehors du champ de vision du conducteur.

Dans une version classique, le balai d'essuie-glace est réalisé sous la forme d'étriers articulés qui tiennent la lame racleuse d'essuyage en plusieurs endroits discrets répartis longitudinalement en lui conférant un cintrage lui permettant d'épouser l'éventuelle courbure ou galbe du pare-brise.

Dans une version plus récente dénommée "flat blade" (pour "lame plate"), le balai d'essuie-glace est réalisé sous la forme d'un ensemble semi-rigide qui maintient la lame d'essuyage sur toute sa longueur grâce à une ou des vertèbres de cintrage permettant d'appliquer le balai et la lame d'essuyage sur le pare-brise sans avoir à utiliser d'étriers.

Dans les deux conceptions, le balai d'essuie-glace est relié au bras d'entraînement par un système de connexion comportant un connecteur et un adaptateur complémentaires.

Le connecteur est une pièce qui est solidarisée au balai d'essuie-glace et qui est en général fixée directement sur la lame d'essuyage ou sur la "flat blade" ou lame plate, tandis que l'adaptateur est solidaire du connecteur.

L'adaptateur est une pièce intermédiaire qui permet la liaison et la fixation du connecteur sur le bras d'entraînement. Il est en général conformé pour être engagé dans une tête ou pièce terminale en forme de chape et à section transversale en U renversé du bras d'entraînement.

Chacun de ces deux composants (connecteur et adaptateur) comporte des moyens d'articulation conçus pour coopérer avec des moyens complémentaires de l'autre composant, pour définir au moins un axe transversal d'articulation des deux composants l'un par rapport à l'autre, qui est aussi l'axe d'articulation du balai d'essuie-glace par rapport au bras d'entraînement.

Selon une technique connue, l'un des composants, tel que le connecteur, comprend en général un axe physique sensiblement cylindrique qui définit l'axe d'articulation et qui est reçu dans un logement de forme complémentaire de l'autre composant.

L'adaptateur comporte en général un corps allongé qui est conformé pour être engagé dans la pièce terminale d'extrémité libre avant du bras d'entraînement de façon que ce corps s'étende au moins en partie entre deux parois latérales sensiblement parallèles de cette pièce terminale.

Un adaptateur permet d'associer un balai d'essuie-glace à un type particulier de pièce terminale. Dans le cas des pièces terminales précitées à section en U renversé, il en existe plusieurs variétés.

On connaît un bras d'essuie-glace dont la pièce terminale porte un capot monté coulissant en translation longitudinale. Le capot est monté coulissant longitudinalement entre une première position avant ou position avancée, et une seconde position arrière ou position reculée. Outre un intérêt esthétique, ce type de capot peut assurer d'autres fonctions.

Différents exemples de conceptions d'un adaptateur et d'un ensemble associé sont illustrés dans le document FR-A1-3.037.896.

La figure 12 de ce document illustre une conception dans laquelle l'adaptateur comporte un corps de forme allongé longitudinalement qui est délimité par deux parois latérales longitudinales verticales opposées transversalement et reliées entre elles par une paroi supérieure horizontale et qui est conformé pour être monté dans une chape complémentaire à section en U renversé appartenant à un bras d'essuie-glace, et dans lequel, à son extrémité longitudinale avant, le corps de l'adaptateur comporte au moins une patte de rétention qui s'étend longitudinalement vers l'avant et qui est conformée pour coopérer avec la chape ou un organe ou composant porté par la chape, afin de retenir l'adaptateur par rapport à la chape. Le préambule de la revendication indépendante 1 est divulgué dans FR-A1-3.037.905.

L'invention propose un adaptateur perfectionné de ce type qui soit simple, efficace et économique.

Selon un premier aspect, l'invention, propose un adaptateur pour un essuie-glace, notamment de véhicule automobile, comportant un corps de forme allongé longitudinalement qui est délimité par deux parois latérales longitudinales verticales opposées transversalement et reliées entre elles par une paroi supérieure horizontale et qui est conformé pour être monté dans une chape complémentaire à section en U renversé appartenant à un bras d'essuie-glace,
caractérisé en ce que le corps de l'adaptateur comporte une patte de verrouillage :
- qui s'étend verticalement en saillie au-dessus de la face supérieure du corps ;
- qui est configurée pour être reçu à travers un trou de la chape ;
- qui porte une surface arrière de contact avec un bord du trou de la chape ;
- qui est reliée au corps de l'adaptateur par une partie verticale de liaison qui est apte à se déformer élastiquement pour permettre un déplacement longitudinal de la surface arrière de contact, et ayant une orientation générale longitudinale parallèle à la paroi supérieure.

Selon d'autres caractéristiques de l'invention :
- à son extrémité longitudinale avant, le corps de l'adaptateur comporte au moins une patte de rétention qui s'étend longitudinalement vers l'avant et qui est conformée pour coopérer avec la chape ou un composant porté par la chape, afin de retenir l'adaptateur par rapport à la chape ;
- l'adaptateur comporte des moyens d'articulation en pivotement de l'adaptateur par rapport à un organe complémentaire de connexion à un bras d'essuie-glace, autour d'un axe transversal d'articulation ;
- la au moins une patte de rétention et la patte de verrouillage sont disposées longitudinalement de part et d'autre de l'axe d'articulation de l'adaptateur sur l'organe complémentaire de connexion ;;
- la partie verticale de liaison s'étend en-dessous de la face supérieure du corps de l'adaptateur ;
- la partie verticale de liaison est apte à se déformer élastiquement pour pivoter par rapport au corps de l'adaptateur, autour d'un axe transversal adjacent à l'extrémité inférieure de la partie verticale de liaison ;
- l'axe transversal est disposé verticalement en-dessous de la paroi supérieure horizontale du corps de l'adaptateur ;
- à son extrémité longitudinale avant, le corps de l'adaptateur comporte au moins deux pattes de rétention dont chacune s'étend longitudinalement vers l'avant dans le prolongement d'une paroi latérale associée du corps de l'adaptateur et est conformée pour coopérer avec la chape ou un composant porté par la chape ;
- le composant porté par la chape est un embout d'extrémité longitudinale avant qui est monté à une extrémité libre avant de la chape du bras d'entraînement ;
- la partie supérieure libre de la patte de verrouillage est conformée en un crochet comportant une branche verticale qui porte la surface arrière de contact et qui est prolongée par une branche de verrouillage qui s'étend longitudinalement vers l'arrière et qui est délimitée par une face inférieure conformée pour coopérer avec une portion en vis-à-vis de la chape ;
- la face inférieure de la branche de verrouillage est une face plane ;
- la branche de verrouillage du crochet est apte à se déformer élastiquement pour pivoter par rapport à la branche verticale, autour d'un axe transversal adjacent à la branche verticale ;
- la branche de verrouillage du crochet comporte une portion de surface profilée formant came qui est apte à coopérer avec le bord du trou de la chape pour provoquer une déformation de la partie verticale de liaison pour provoquer un déplacement longitudinal du crochet par rapport au corps de l'adaptateur ;
- le crochet comporte un évidement formé dans la zone de raccordement entre la branche verticale et la branche de verrouillage ;
- le crochet comporte un évidement formé dans le prolongement de la face inférieure de la branche de verrouillage ;
- l'évidement est une rainure d'orientation transversale ;
- la face inférieure de la branche de verrouillage est reliée à l'évidement par une arête transversale qui est apte à coopérer avec la portion en vis-à-vis de la chape ;
- l'adaptateur comporte au moins une patte de retenue longitudinale du corps de l'adaptateur par rapport à la chape ou un composant porté par la chape, qui s'étend longitudinalement vers l'arrière et qui est conformée pour coopérer avec la chape ou un composant porté par la chape.

Selon un deuxième aspect, l'invention, propose un adaptateur pour un essuie-glace, notamment de véhicule automobile, comportant un corps de forme allongé longitudinalement qui est délimité par deux parois latérales longitudinales verticales opposées transversalement et reliées entre elles par une paroi supérieure horizontale et qui est conformé pour être monté dans une chape complémentaire à section en U renversé appartenant à un bras d'essuie-glace, caractérisé en ce que le corps de l'adaptateur comporte une patte de verrouillage qui s'étend verticalement en saillie au-dessus d'une face supérieure du corps ; qui est configurée pour être reçu à travers un trou de la chape ; et dont la partie supérieure libre est conformée en un crochet comportant une branche verticale prolongée par une branche de verrouillage qui s'étend longitudinalement et qui est délimitée par une face inférieure conformée pour coopérer avec une portion en vis-à-vis de la chape, et dans lequel la branche de verrouillage du crochet est apte à se déformer élastiquement par rapport à la branche verticale.

Selon d'autres caractéristiques de l'invention:
- la branche de verrouillage est apte à se déformer élastiquement pour pivoter par rapport à la branche verticale, autour d'un axe transversal adjacent à la branche verticale ;
- le crochet comporte un évidement formé dans la zone de raccordement entre sa branche verticale et sa branche de verrouillage ;
- l'évidement est formé dans le prolongement de la face inférieure de la branche de verrouillage ;
- l'évidement est une rainure d'orientation transversale ;
- la face inférieure de la branche de verrouillage est reliée à la rainure par une arête transversale qui est apte à coopérer avec la portion en vis-à-vis de la chape ;
- la face inférieure de la branche de verrouillage est une face plane.

Selon un troisième aspect de l'invention, l'invention propose un adaptateur pour un essuie-glace, notamment de véhicule automobile, comportant un corps de forme allongé longitudinalement qui est délimité par deux parois latérales longitudinales verticales opposées transversalement et reliées entre elles par une paroi supérieure horizontale et qui est conformé pour être monté dans une chape complémentaire à section en U renversé appartenant à un bras d'essuie-glace, et dans lequel, à son extrémité longitudinale avant, le corps de l'adaptateur comporte au moins une patte de rétention qui s'étend longitudinalement vers l'avant et qui est conformée pour coopérer avec la chape ou un composant porté par la chape, afin de retenir l'adaptateur par rapport à la chape, caractérisé en ce que, à son extrémité longitudinale avant, le corps de l'adaptateur comporte au moins une surface incurvée convexe de butée pour positionner longitudinalement l'adaptateur par rapport à la chape ou un composant porté par la chape.

Selon d'autres caractéristiques de l'invention :
- la surface convexe de butée s'étend verticalement ;
- la surface convexe de butée présente un bord transversal supérieur qui est décalé longitudinalement vers l'avant par rapport à un bord transversal inférieur de la surface convexe de butée ;
- la surface convexe de butée est apte à venir en appui longitudinal contre une portion en vis-à-vis de la chape ou d'un composant porté par la chape de manière à guider l'assemblage de l'adaptateur dans la chape ou dans un composant porté par la chape ;
- la surface convexe de butée est formée à une extrémité longitudinale avant d'une paroi latérale longitudinale du corps de l'adaptateur ;
- la au moins une patte de rétention comporte un chanfrein inférieur d'insertion de l'adaptateur dans une partie complémentaire de la chape ou d'un composant porté par la chape ;
- l'adaptateur comporte au moins une patte de retenue longitudinale du corps de l'adaptateur par rapport à la chape ou un composant porté par la chape, qui s'étend longitudinalement vers l'arrière et qui est conformée pour coopérer avec la chape ou un composant porté par la chape ;
- l'adaptateur comporte au moins un plot avant qui s'étend transversalement en saillie vers l'extérieur et qui est agencé sur une partie avant d'une paroi latérale, du corps, le plot avant étant configuré pour coopérer avec un composant porté par la chape de manière à garantir que ce composant est dans une position longitudinale déterminée par rapport à la chape ;
- l'adaptateur comporte au moins un plot arrière qui s'étend transversalement en saillie vers l'extérieur et qui est agencé sur une partie arrière d'une paroi latérale du corps, le plot arrière étant configuré pour coopérer avec la chape de manière à assurer une retenue longitudinale vers l'avant de l'adaptateur par rapport à la chape ;
- le corps de l'adaptateur comporte une patte de verrouillage qui s'étend verticalement en saillie au-dessus de la face supérieure du corps qui est configurée pour être reçue à travers un trou de la chape, qui porte une surface arrière de contact avec un bord transversal du trou de la chape, et qui est reliée au corps de l'adaptateur par une partie verticale de liaison qui est apte à se déformer élastiquement pour permettre un déplacement longitudinal de la surface arrière de contact.

Selon un quatrième aspect de l'invention, l'invention propose un adaptateur pour un essuie-glace, notamment de véhicule automobile, comportant un corps de forme allongé longitudinalement qui est délimité par deux parois latérales longitudinales verticales opposées transversalement et reliées entre elles par une paroi supérieure horizontale et qui est conformé pour être monté dans une chape complémentaire à section en U renversé appartenant à un bras d'essuie-glace, caractérisé en ce que le corps de l'adaptateur comporte au moins une patte élastique qui est déformable selon la direction transversale de manière à s'escamoter lors de l'assemblage et/ou lors du démontage de l'adaptateur par rapport à la chape, la patte élastique étant portée par une paroi latérale du corps de l'adaptateur.

Selon d'autres caractéristiques de l'invention :
- la patte élastique porte un ergot de retenue longitudinale configuré pour coopérer avec la chape et/ou un composant porté par la chape ;
- l'ergot de retenue présente un profil de came d'escamotage apte à coopérer avec la chape et/ou un composant porté par la chape ;
- le profil de came est un profil à deux pentes opposées de montage et de démontage respectivement ;
- la patte élastique s'étend longitudinalement, et l'ergot est formé à une extrémité libre avant de la patte élastique ;
- à son extrémité longitudinale avant, le corps de l'adaptateur comporte au moins une surface incurvée convexe de butée pour positionner longitudinalement l'adaptateur par rapport à la chape ou un composant porté par la chape ;
- la surface convexe de butée s'étend verticalement ;
- la surface convexe de butée présente un bord transversal supérieur qui est décalé longitudinalement vers l'avant par rapport à un bord transversal inférieur de la surface convexe de butée ;
- la surface convexe de butée est apte à venir en appui longitudinal contre une portion en vis-à-vis de la chape ou d'un composant porté par la chape de manière à guider l'assemblage de l'adaptateur dans la chape ou dans un composant porté par la chape ;
- la surface convexe de butée est formée à une extrémité longitudinale avant d'une paroi latérale longitudinale du corps de l'adaptateur ;
- l'adaptateur comporte au moins une patte de retenue longitudinale du corps de l'adaptateur par rapport à la chape ou un composant porté par la chape, qui s'étend longitudinalement vers l'arrière et qui est conformée pour coopérer avec la chape ou un composant porté par la chape ;
- l'adaptateur comporte au moins un plot avant qui s'étend transversalement en saillie vers l'extérieur et qui est agencé sur une partie avant d'une paroi latérale, du corps, le plot avant étant configuré pour coopérer avec un composant porté par la chape de manière à garantir que ce composant est dans une position longitudinale déterminée par rapport à la chape ;
- l'adaptateur comporte au moins un plot arrière qui s'étend transversalement en saillie vers l'extérieur et qui est agencé sur une partie arrière d'une paroi latérale du corps, le plot arrière étant configuré pour coopérer avec la chape de manière à assurer une retenue longitudinale vers l'avant de l'adaptateur par rapport à la chape ;
- à son extrémité longitudinale avant, le corps de l'adaptateur comporte au moins une patte de rétention qui s'étend longitudinalement vers l'avant et qui est conformée pour coopérer avec la chape ou un composant porté par la chape, afin de retenir l'adaptateur par rapport à la chape ;
- la au moins une patte de rétention comporte un chanfrein inférieur d'insertion de l'adaptateur dans une partie complémentaire de la chape ou d'un composant porté par la chape ;
- le corps de l'adaptateur comporte une patte de verrouillage qui s'étend verticalement en saillie au-dessus de la face supérieure du corps ; qui est configurée pour être reçu à travers un trou de la chape ; qui porte une surface arrière de contact avec un bord transversale du trou de la chape ; et qui est reliée au corps de l'adaptateur par une partie verticale de liaison qui est apte à se déformer élastiquement pour permettre un déplacement longitudinal de la surface arrière de contact.

L'invention propose aussi un ensemble comportant un bras d'essuie-glace et un adaptateur selon l'invention, caractérisé en en ce que la chape du bras d'essuie-glace est équipée d'un capot avant qui recouvre la chape et qui est ouvert verticalement vers le bas.

Le capot est monté coulissant longitudinalement sur la chape.

L'invention propose également un balai d'essuie-glace de véhicule automobile comprenant une lame d'essuyage et un ensemble de connexion comportant un adaptateur selon l'invention.

### BREVE DESCRIPTION DES FIGURES

D'autres caractéristiques et avantages de l'invention apparaîtront au cours de la lecture de la description détaillée qui va suivre pour la compréhension de laquelle on se reportera aux dessins annexés dans lesquels :
- la figure 1 est une vue schématique en perspective d'un essuie-glace comportant un balai d'essuie-glace, un bras d'entraînement du balai, et un système de connexion du balai d'essuie-glace au bras d'entraînement ;
- la figure 2 est une vue schématique en perspective et à plus grande échelle d'une partie avant d'un bras d'essuie-glace équipé notamment d'un capot coulissant ;
- la figure 3 est une vue schématique en perspective éclatée des composants du bras d'essuie-glace de la figure 2 en association avec un exemple d'un connecteur complémentaire d'un adaptateur selon un premier mode de réalisation ;
- la figure 4 est une vue à grande échelle en perspective et partiellement en section par un plan vertical longitudinal médian qui illustre la mise en place et l'assemblage de l'adaptateur selon un premier mode de réalisation dans la chape ;
- les figures 5A et 5B sont deux vues en perspective à grande échelle de l'adaptateur selon un premier mode de réalisation ;
- la figure 6 est une vue latérale de l'adaptateur des figures 5A et 5B ;
- la figure 7 est une vue à grande échelle de la partie supérieure en forme de crochet de la patte de verrouillage de l'adaptateur de la figure 6 ;
- la figure 8 est une vue en perspective de dessous de la chape du bras d'entraînement de la figure 1 munie de l'embout ;
- la figure 9 est une vue en perspective de dessous du capot coulissant de la figure 1 ;
- les figures 10 et 11 sont deux vues de détail à grande échelle, selon deux angles différents de perspective, qui illustrent un adaptateur selon un deuxième mode de réalisation ;
- la figure 12 est une vue latérale de l'adaptateur illustré aux figures 10 et 11 ;
- la figure 13 est une vue de dessus de l'adaptateur illustré aux figures 10 et 11 ;
- la figure 14 est une vue en bout de l'extrémité longitudinale avant de l'adaptateur illustré à la figure 13 ;
- la figure 15 est une vue latérale de l'adaptateur selon le deuxième mode de réalisation qui est représenté en position montée dans le bras d'entraînement équipé de son capot coulissant et de l'embout ;
- la figure 16 est une vue analogue à celle de la figure 15, sans le capot coulissant ;
- la figure 17 est une vue en perspective de dessous de l'ensemble illustré à la figure 15 ;
- la figure 18 est une vue en perspective de dessous de l'ensemble illustré à la figure 16 ;
- la figure 19 est une vue de dessous de l'ensemble illustré à la figure 15 ;
- la figure 20 est une vue en perspective de l'ensemble illustré aux figures 16 et 18 et sur laquelle le connecteur est représenté en position montée dans l'adaptateur ;
- la figure 21 est une vue en perspective à grange échelle qui illustre en détail la coopération des butées incurvées de l'adaptateur avec l'embout ; et
- la figure 22 est une vue en coupe par un plan transversal vertical selon la ligne 22-22 de la figure 15.

### DESCRIPTION DETAILLEE DES FIGURES

Dans la suite de la description, des éléments présentant une structure identique ou des fonctions analogues seront désignés par des mêmes références.

Dans la suite de la description, on adoptera de manière non limitative des orientations longitudinale, verticale et transversale indiquées par le trièdre "L,V,T" des figures. On définit aussi un plan horizontal qui s'étend longitudinalement et transversalement.

Ainsi, dans la description, les dénominations longitudinales ou latérales se réfèrent à l'orientation du balai d'essuie-glace ou du bras d'entraînement.

La direction longitudinale correspond à l'axe principal du balai d'essuie-glace ou du bras d'entraînement dans lequel il s'étend d'arrière en avant selon l'orientation de l'axe L du trièdre L, V, T.

Les directions interne, externe, intérieure ou extérieure peuvent faire référence à une pièce dans sa globalité, et concernent par exemple l'intérieur ou l'extérieur de cette pièce.

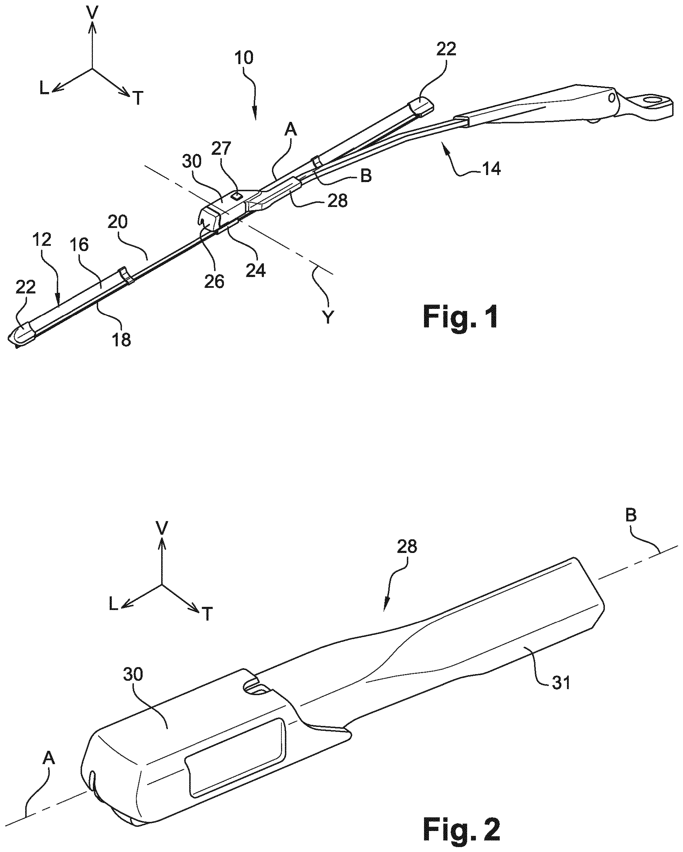

On a représenté à la figure 1 un essuie-glace 10 comportant notamment un balai d'essuie-glace 12 et un bras 14 d'entraînement (aussi appelé bras d'essuie-glace) du balai d'essuie-glace 12.

Le balai 12 est ici du type "flat blade" et comprend un corps longitudinal 16, une lame d'essuyage 18, en général en caoutchouc ou en matériau élastomère, et au moins une vertèbre (non représentée) qui rigidifie la lame et favorise son application sur la surface extérieure d'une vitre du véhicule telle que par exemple un pare-brise galbé (non représenté) du véhicule.

Le corps longitudinal 16 du balai d'essuie-glace 12 comporte un déflecteur aérodynamique supérieur 20 destiné à améliorer le fonctionnement du système d'essuyage, ce déflecteur ayant pour fonction d'améliorer l'application du balai d'essuie-glace 12 sur le pare-brise, et donc d'améliorer la performance aérodynamique de l'essuie-glace 10.

Le balai d'essuie-glace 12 comporte en outre des embouts d'extrémité 22, ou agrafes d'accrochage, de la lame 18 et de la vertèbre sur le corps longitudinal 16, ces embouts 22 étant situés à chacune des deux extrémités longitudinales opposées avant et arrière du corps longitudinal 16.

Le bras d'entraînement 14 est destiné à être entraîné par un moteur pour suivre un mouvement de va-et-vient, et par exemple un mouvement alterné angulaire, permettant à la lame d'essuyage 18 d'évacuer l'eau et éventuellement d'autres éléments indésirables recouvrant la surface extérieure du pare-brise.

Sensiblement à mi longueur, le balai d'essuie-glace 12 comprend un ensemble de connexion comportant un connecteur 24 intermédiaire et un adaptateur 26, 1026.

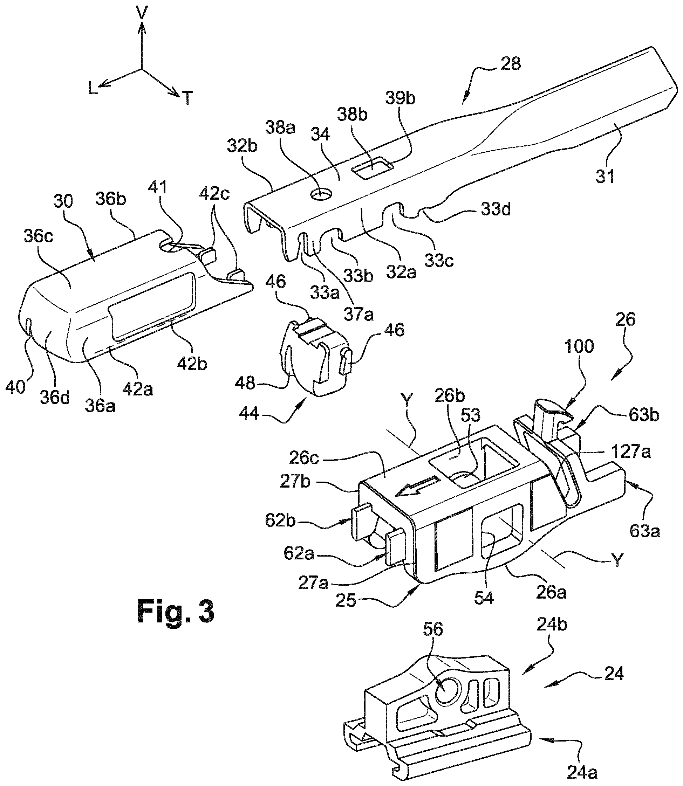

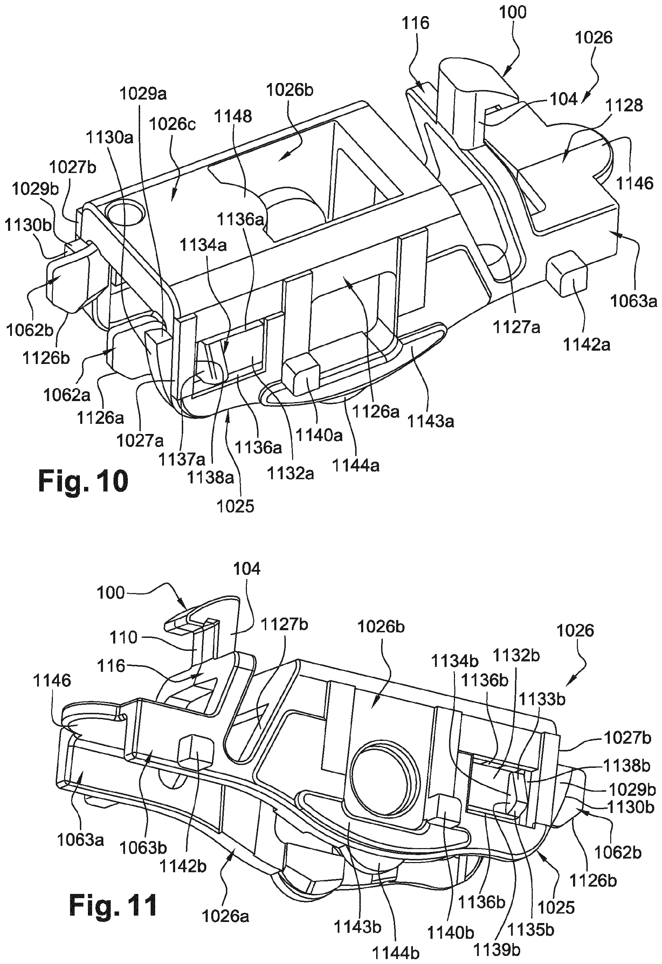

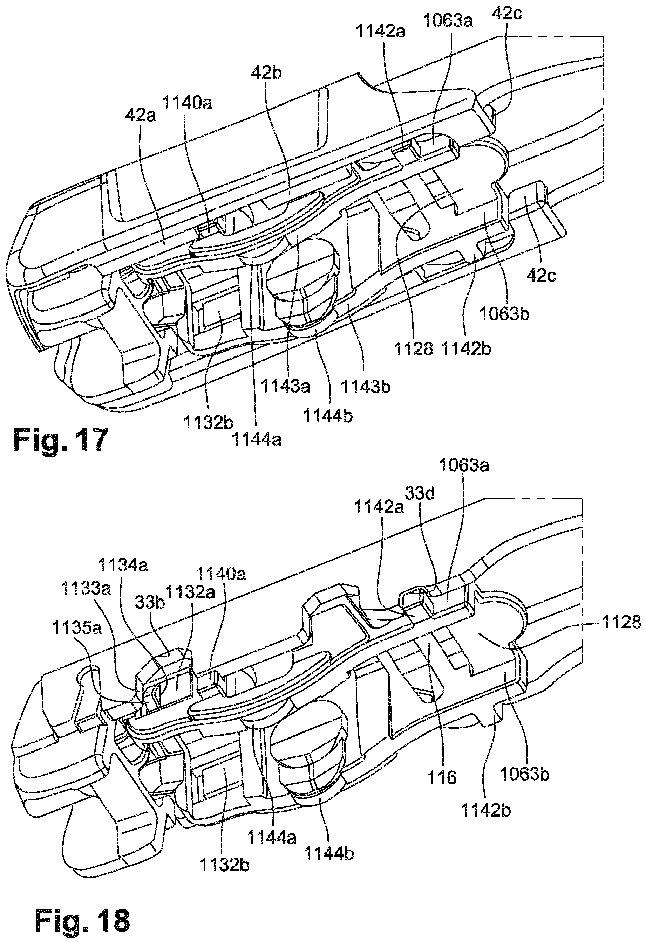

Deux modes de réalisation d'un adaptateur 26, 1026, sont représentés. Le premier mode de réalisation est représenté aux figures 3 à 7. Le deuxième mode de réalisation de l'adaptateur est représenté aux figures 10 à 22.

Chaque adaptateur 26, 1026 est une pièce réalisée par moulage en une seule pièce et il présente une symétrie de conception par rapport à un plan longitudinal et vertical médian.

L'adaptateur 26, 1026 solidaire du bras 14 est monté sur le connecteur 24 de façon à permettre un degré de liberté en pivotement autour d'un axe transversal d'articulation Y qui est sensiblement perpendiculaire à l'axe longitudinal du balai d'essuie-glace 12.

Ce degré de liberté permet un pivotement dans les deux sens du balai d'essuie-glace 12 par rapport au bras d'entraînement 14 et permet ainsi au balai d'essuie-glace 12, lors de ses déplacements, de suivre la courbure ou galbe du pare-brise.

L'adaptateur 26, 1026 assure la liaison du balai d'essuie-glace 12 au bras d'entraînement 14 et en particulier avec une tête ou pièce terminale d'extrémité longitudinale avant du bras d'entraînement 14 qui peut être formée d'une seule pièce avec le bras d'entraînement, ou bien être rapportée et fixée sur celui-ci.

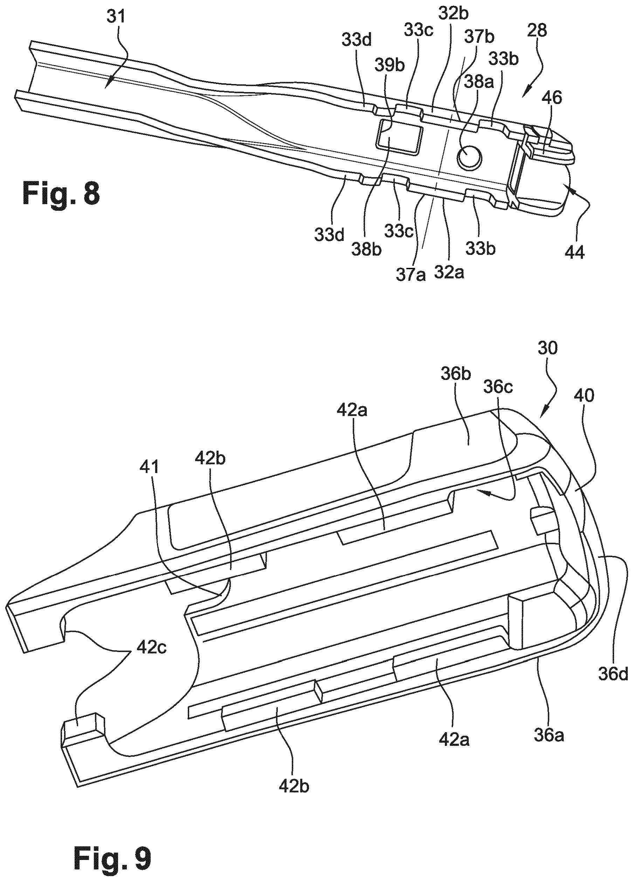

Aux figures 1 à 3 et 8, la pièce terminale du bras d'entraînement est un tronçon d'extrémité libre avant en forme d'une chape 28 à section transversale sensiblement en U renversé.

Un capot 30 est monté coulissant sur la chape d'extrémité libre 28 et il recouvre la chape 28.

La chape 28 a une forme allongée qui s'étend selon un axe longitudinal A qui est en général sensiblement parallèle à l'axe général longitudinal du balai d'essuie-glace 12.

La chape 28 comprend une partie 31 de liaison au reste du bras d'entraînement 14, auquel elle est par exemple fixée par sertissage.

La partie 31 a une forme générale allongée et s'étend le long d'un axe longitudinal B sensiblement parallèle à l'axe A et décalé latéralement ou transversalement par rapport à l'axe A, comme cela est visible aux figures 1 et 2. La partie 31 est reliée à une extrémité arrière de la chape 28.

La chape 28 comprend deux parois latérales verticales d'orientation longitudinale 32a, 32b dont les bords longitudinaux supérieurs sont reliés entre eux par une paroi transversale supérieure d'orientation longitudinale 34. Les parois 32a, 32b et 34 délimitent entre elles un espace intérieur de logement de l'adaptateur 26.

Les parois latérales 32a, 32b comportent une série d'encoches traversantes 33a, 33b, 33c, 33d qui sont ouvertes verticalement vers le bas et débouchent dans leurs bords longitudinaux inférieurs 37a, 37b.

Les encoches 33a, 33b, 33c, 33d de chaque paroi 32a, 32b sont ici au nombre de quatre qui sont espacées les unes des autres et disposées longitudinalement les unes derrière les autres.

L'encoche avant 33a de chaque paroi latérale 32a, 32b, située longitudinalement la plus à l'avant, a une largeur longitudinale relativement faible par rapport aux autres encoches et elle s'étend verticalement sensiblement sur toute la hauteur de la paroi latérale correspondante 32a, 32b.

L'encoche arrière 33d, située longitudinalement la plus à l'arrière, a une hauteur relativement faible par rapport à celle des autres encoches.

Les encoches 33b, 33c intermédiaires entre les encoches avant 33a et arrière 33d ont une largeur longitudinale relativement importante par rapport à celle de l'encoche avant 33a et elles s'étendent verticalement sensiblement jusqu'à mi-hauteur de la paroi latérale correspondante 32a, 32b.

La paroi supérieure 34 comporte deux ouvertures 38a, 38b traversantes disposées longitudinalement l'une derrière l'autre. L'ouverture avant 38a a un contour sensiblement circulaire et l'ouverture arrière 38b a un contour sensiblement rectangulaire.

En section par un plan vertical et transversal, le capot 30 a une section sensiblement en forme de U renversé.

Le capot 30 comprend deux parois latérales longitudinales et verticales 36a, 36b dont les bords longitudinaux supérieurs sont reliés ensemble par une paroi supérieure longitudinale et horizontale 36c.

Les bords verticaux avant des parois latérales 36a, 36b, et supérieure 36c sont en outre reliés entre eux par une paroi avant 36d du capot d'orientation générale verticale et transversale.

En position montée du capot 30, sa paroi supérieure 36c recouvre la paroi supérieure 34 de la chape 28 et ses parois latérales 36a, 36b s'étendent longitudinalement de part et d'autre de la chape, en regard des faces externes des parois latérales 32a, 32b (Voir figure 2).

La paroi avant 36d du capot s'étend en avant de la chape 28 et elle comporte une fente verticale 40 apte à recevoir une portion en vis-à-vis de la partie supérieure du déflecteur 20 du balai d'essuie-glace 12, visible à la figure 1.

A son extrémité arrière, la paroi supérieure 36c du capot 30 comporte une encoche 41 de forme générale en C, qui débouche longitudinalement dans le bord transversal arrière libre de la paroi supérieure 36c.

Le capot 30 est mobile en translation longitudinale sur la chape 28 du bras d'entraînement 14, entre une position arrière, représentée à la figure 2, et une position avancée décalée longitudinalement par rapport à la position arrière.

En position avancée, l'encoche 41 du capot 30 peut être située au droit de l'ouverture avant 38a de la chape tandis que, en position arrière, l'encoche 41 peut être située au droit de l'ouverture arrière 38b.

Pour cela, le capot 30 comprend des moyens de guidage en translation longitudinale destinés à coopérer avec la chape 28.

Chaque paroi latérale 36a, 36b du capot 30 comprend un rail de guidage agencé au niveau de son bord longitudinal inférieur. Chaque rail de guidage se présente sous la forme d'une série de rebords longitudinaux 42a, 42b, 42c sensiblement coplanaires qui s'étendent transversalement vers l'intérieur.

Les trois rebords longitudinaux 42a, 42b, 42c de chaque paroi 36a, 36b sont disposées longitudinalement les uns derrière les autres et espacés les uns des autres.

Lors du coulissement longitudinal du capot 30 le long de la chape 28 du bras d'entraînement 14, les rebords 42a, 42b, 42c du capot 30 peuvent coopérer par glissement avec les bords inférieurs libres des parois latérales 32a, 32b de la chape 28.

Comme illustré aux figures 3, 4 et 15 à 22, un embout 44 d'extrémité longitudinale avant est monté à l'extrémité libre avant de la chape 28 du bras d'entraînement 14, pour fermer l'espace précité de la chape dans lequel est logé un corps arrière allongé 25, 1025 de l'adaptateur 26, 1026.

L'embout 44 se présente sous la forme d'un bloc de matière, de préférence élastique, qui comprend deux nervures latérales opposées 46 de fixation dont chacune est formée en relief sur une face latérale verticale et s'étend globalement verticalement. L'embout 44 est par exemple réalisé par moulage par injection.

Chaque nervure de fixation 46 est destinée à être engagée dans une encoche avant 33a de la paroi latérale associée 32a, 32b de la chape 28, pour assurer la fixation et la retenue de l'embout 44 sur la chape 28.

L'embout 44 comprend en outre une fente verticale 48 apte à recevoir une portion en vis-à-vis de la partie supérieure du déflecteur 20 du balai d'essuie-glace 12.

Dans le premier mode de réalisation représenté aux figures 3 à 7, l'adaptateur 26, comporte un corps principal arrière allongé 25 qui est conformé pour être monté dans la chape 28.

En section par un plan vertical transversal, l'adaptateur a une forme sensiblement en U renversé. Il comporte deux parois latérales 26a, 26b verticales et longitudinales qui sont délimitées longitudinalement vers l'avant par un bord vertical 27a, 27b d'extrémité longitudinale avant et longitudinalement vers l'arrière par un bord vertical 127a, 127b d'extrémité longitudinale arrière.

Les deux parois latérales 26a, 26b sont reliées ensemble par une paroi supérieure horizontale 26c.

Les parois latérales 26a, 26b comprennent respectivement un orifice 54 et un tourillon 53 alignés transversalement. Ces éléments 53 et 54 sont situés longitudinalement sensiblement au milieu des parois latérales 26a, 26b de l'adaptateur 26.

De manière connue, les éléments 53 et 54 définissent l'axe Y sensiblement transversal d'articulation en pivotement du connecteur 24 par rapport à l'adaptateur 26, et donc du balai d'essuie-glace 12 par rapport au bras d'entraînement 14.

Le connecteur 24 comprend essentiellement, une partie inférieure 24a de sertissage ou de fixation au reste du balai d'essuie-glace 12, et une partie supérieure 24b destinée à être logée entre les faces internes des parois latérales 26a, 26b de l'adaptateur 26.

La partie supérieure 24b comporte des moyens 56 complémentaires des éléments 53 et 54 destinés à être alignés avec l'axe Y.

En variante, l'un des composants parmi l'adaptateur 26 et le connecteur 24 peut comporter des tourillons cylindriques centrés sur l'axe Y et destinés à être engagés par encliquetage élastique dans un orifice ou des orifices complémentaires de l'autre de ces composants.

A son extrémité longitudinale avant, le corps 25 de l'adaptateur 26 comporte ici - à titre non limitatif - deux pattes de rétention 62a, 62b dont chacune s'étend longitudinalement vers l'avant dans le prolongement d'une paroi latérale 26a, 26b associée du corps 25 de l'adaptateur 26.

Chaque patte de rétention 62a, 62b est conformée pour coopérer avec la chape 28 ou un composant porté par la chape 28.

Ici, les pattes de rétention 62a et 62b sont destinées à être engagées dans des évidements complémentaires de l'embout 44 monté à l'extrémité libre avant de la chape 28 du bras, en permettant aussi la mise en position de l'adaptateur 26.

Les pattes de rétention 62a et 62b sont sensiblement parallèles, elles ont chacune une forme générale parallélépipédique rectangle, et elles s'étendent verticalement sur une majeure partie de la hauteur des parois latérales 26a et 26b.

A titre de variante non représentée, le corps 25 de l'adaptateur 26 peut comporter une seule patte de rétention qui s'étend horizontalement et longitudinalement vers l'avant dans le prolongement de la paroi supérieure horizontale 26c du corps 25 de l'adaptateur 26 et qui est conformée pour coopérer avec la chape 28 ou un composant porté par la chape 28.

A titre non limitatif, à son extrémité longitudinale arrière, le corps 25 de l'adaptateur 26 comporte ici deux pattes de retenue 63a, 63b dont chacune s'étend longitudinalement vers l'arrière dans le prolongement d'une paroi latérale 26a, 26b associée du corps 25 de l'adaptateur 26.

Chaque patte de retenue 63a, 63b est conformée pour coopérer avec la chape 28 ou un composant porté par la chape 28.

Les pattes de retenue 63a et 63b sont sensiblement parallèles, elles ont chacune une forme générale parallélépipédique rectangle, et elles s'étendent verticalement sur une partie inférieure de la hauteur des parois latérales 26a et 26b.

Au voisinage de son extrémité longitudinale arrière, le corps 25 de l'adaptateur 26 comporte une patte de verrouillage 100 qui est configurée pour être reçue à travers un trou de la chape 28 qui est ici l'ouverture arrière 38b de contour sensiblement rectangulaire de la paroi supérieure 34 de la chape 28.

L'ouverture ou trou arrière 38b est délimitée longitudinalement vers l'arrière par un bord transversal arrière 39b avec lequel coopère la patte de verrouillage 100 comme cela sera expliqué par la suite.

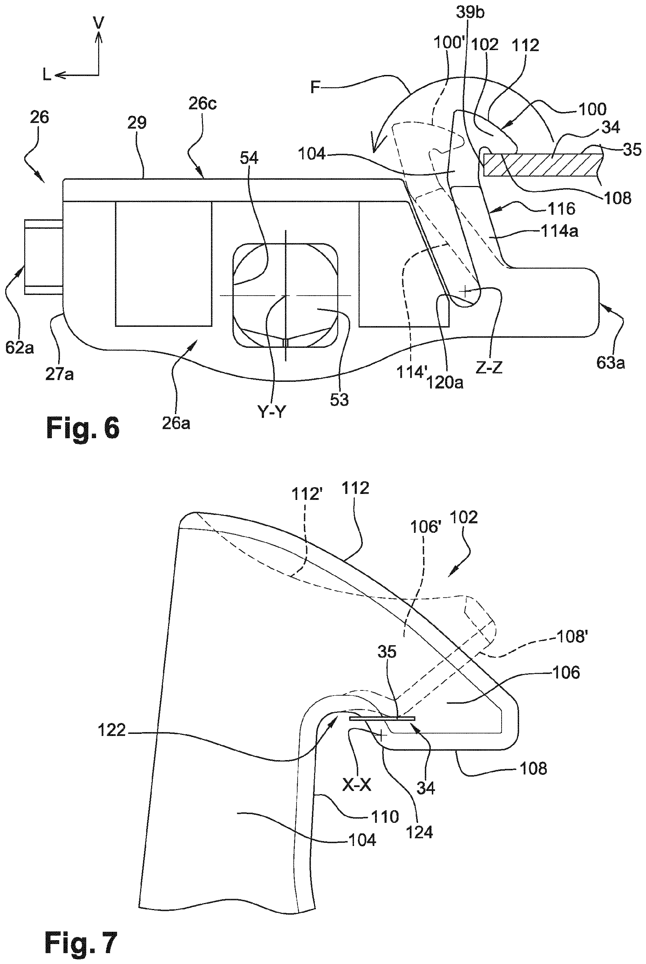

Comme on peut le voir notamment à la figure 6, la patte de verrouillage 100 s'étend verticalement en saillie au-dessus du plan horizontal de la face externe 29 de la paroi supérieure 26c du corps 25 de l'adaptateur 26.

Les pattes de rétention 62a, 62b et la patte de verrouillage 100 sont disposées longitudinalement de part et d'autre de l'axe Y-Y d'articulation en pivotement de l'adaptateur 26 par rapport au connecteur 24.

La patte de verrouillage 100 est disposée longitudinalement entre l'axe Y-Y d'articulation en pivotement de l'adaptateur 26 par rapport au connecteur 24 et les pattes de retenue 63a, 63b.

La patte de verrouillage 100 est configurée pour être reçue à travers l'ouverture 38b de la chape 28 et elle comporte une partie supérieure libre 102 qui est conformée en un crochet.

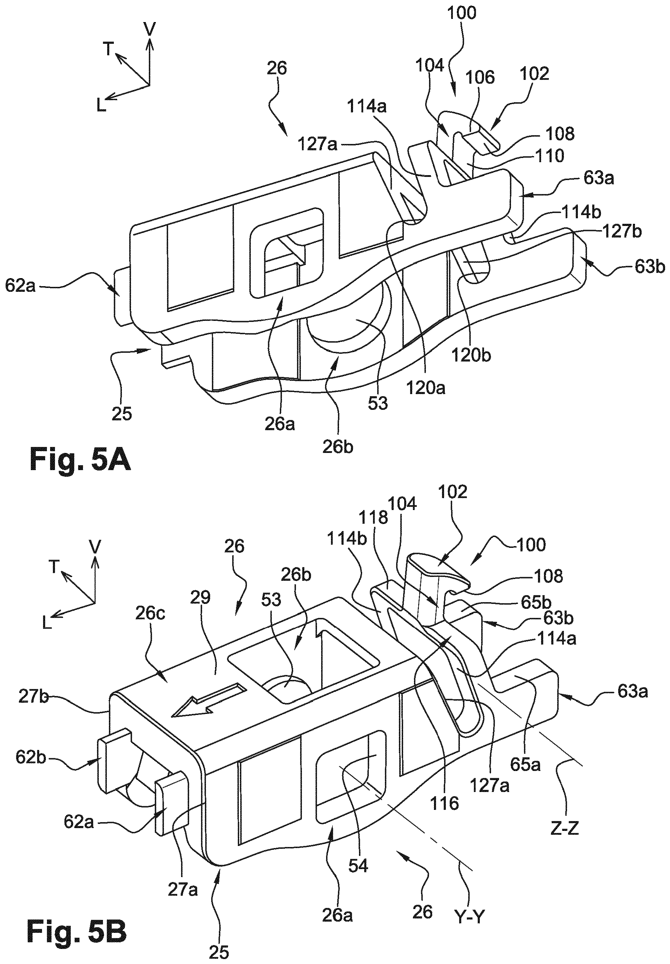

Comme on peut le voir notamment sur les vues en perspective des figures 5A et 5B, cette partie 102 en forme de crochet est une partie pleine qui est centrée transversalement par rapport au corps 25 de l'adaptateur 26.

La partie 102 en forme de crochet comporte une branche centrale verticale 104 qui est prolongée par une branche de verrouillage 106 qui s'étend longitudinalement vers l'arrière.

La branche de verrouillage 106 est délimitée, verticalement vers le bas, par une face inférieure 108 conformée en une facette, ici d'orientation globalement horizontale qui est configurée pour coopérer avec une portion en vis-à-vis de la face externe de la chape 28.

En position montée et verrouillée, la face inférieure 108 est en appui contre une portion 35 de la surface externe de la paroi supérieure 34 de la chape 28 qui est située immédiatement en arrière du bord transversal arrière 39b de l'ouverture arrière 38b.

La branche verticale 104 de la partie en forme de crochet 102 de la patte de verrouillage 100 comporte une surface arrière 110 de contact avec le bord transversal arrière 39b de l'ouverture arrière 38b de la chape 28.

La surface arrière de contact 110 est ici - à titre non limitatif - une surface plane qui s'étend dans un plan globalement vertical et qui est apte à venir en contact avec le bord transversal arrière 39b de l'ouverture arrière 38b de la chape 28 qui est un bord transversal rectiligne.

La partie supérieure de la branche 106 de verrouillage de la partie en forme de crochet 102 comporte une portion de surface profilée 112 formant came qui est apte à coopérer avec le bord transversal arrière 39b de l'ouverture arrière 38b de la chape 28 pour provoquer un déplacement longitudinal du crochet 102 vers l'avant par rapport au corps 25 de l'adaptateur 26.

La surface profilée 112 est ici une portion d'un arc de cylindre convexe.

La patte de verrouillage 100 est reliée au corps 25 de l'adaptateur 26 par une partie verticale de liaison qui est apte à se déformer élastiquement pour permettre un déplacement longitudinal - dans les deux sens - de la surface arrière de contact 110 par rapport au corps 25 de l'adaptateur 26.

Dans le mode de réalisation illustré aux figures 3 à 7, la partie verticale de liaison qui relie la patte de verrouillage 100 au corps 25 de l'adaptateur 26 comporte deux branches latérales de liaison 114a, 114b opposées transversalement.

Chaque branche de liaison 114a, 114b s'étend globalement verticalement, ici avec une inclinaison vers l'avant de bas en haut.

Chaque branche de liaison 114a, 114b s'étend vers le haut depuis la face supérieure 65a, 65b d'une patte associée de retenue 63a, 63b, au voisinage de l'extrémité arrière de cette dernière.

Les extrémités supérieures des deux branches de liaison 114a, 114b sont reliées entre elles par une traverse supérieure 116 qui s'étend horizontalement et qui comporte une face supérieure horizontale 118 à partir de laquelle la branche centrale verticale 104 de la partie en forme de crochet 102 de la patte de verrouillage 100 s'étend globalement verticalement vers le haut.

La partie verticale de liaison constituée par les deux branches de liaison 114a et 114b s'étend verticalement en dessous du plan horizontal de la face externe 29 de la paroi supérieure 26c du corps 25 de l'adaptateur 26.

La partie verticale de liaison constituée par les deux branches de liaison 114a et 114b est apte à se déformer élastiquement pour pivoter par rapport au corps 25 de l'adaptateur 26, autour d'un axe transversal Z-Z qui est adjacent à l'extrémité inférieure de chacune des deux branches de liaison 114a et 114b.

Cet axe transversal de pivotement Z-Z est disposé verticalement en-dessous du plan horizontal de la face externe 29 de la paroi supérieure 26c du corps 25 de l'adaptateur 26.

Pour faciliter la déformation élastique de la partie verticale de liaison et les mouvements de pivotement autour de l'axe transversal Z-Z, un évidemment 120a, 120b est formé à l'avant de l'extrémité inférieure de la branche de liaison 114a, 114b dans la partie de matière qui relie la patte de retenue 63a, 63b à sa paroi latérale associée du corps 25 de l'adaptateur 26.

La capacité de la partie inférieure de liaison à se déformer élastiquement et à pivoter autour de l'axe transversal Z-Z est illustrée à la figure 6 sur laquelle la patte de verrouillage 100 avec sa partie inférieure de liaison est représentée en trait plein à son état libre non déformé, et en pointillés 100', 114' dans un état déformé et pivoté dans le sens anti-horaire indiqué par la flèche F.

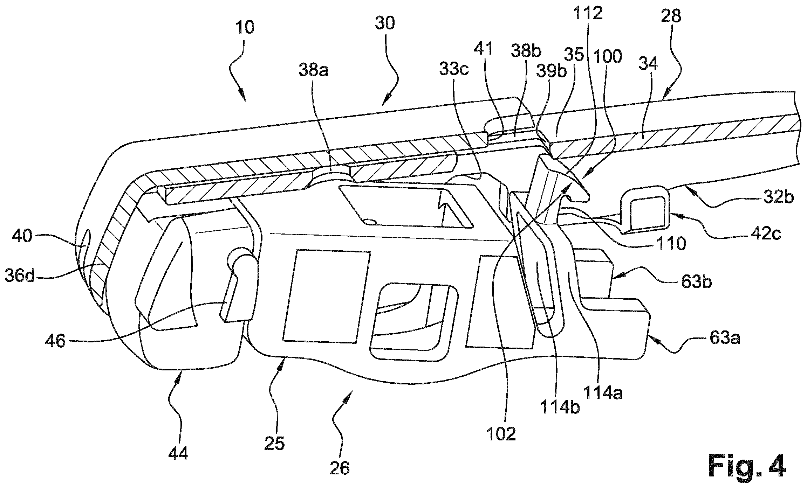

Une étape du montage et de l'assemblage de l'adaptateur 26 dans la chape 28 est illustrée schématiquement et partiellement à la figure 4.

Comme on peut le constater, après avoir engagé les pattes de rétention 62a, 62b dans les évidements complémentaires de l'embout 44 monté à l'extrémité libre avant de la chape 28 du bras, on amène l'adaptateur 26 dans la position illustrée à la figure 4 dans laquelle une portion de la surface profilée convexe 112 vient en contact avec le bord transversal arrière 39b de l'ouverture arrière 38b de la chape 28.

En poursuivant sous effort le mouvement relatif de l'adaptateur 26 par rapport à la chape en vue d'introduire la patte de verrouillage 100 à travers l'ouverture arrière 38b, il se produit un effet de came entre la surface 112 et le bord 39b qui provoque un pivotement de la patte de fixation globalement autour de l'axe transversal Z-Z.

Dès que la face inférieure 108 passe au-dessus de la portion de surface externe 35, la patte de verrouillage 100 est rappelée élastiquement vers son état libre quasi non déformée et la surface arrière 110 de contact vient en contact avec le bord transversal arrière 39b de l'ouverture arrière 38b de la chape 28, en étant en appui contre ce dernier avec une légère charge élastique de contact et d'appui mutuel globalement selon la direction longitudinale.

Lorsque l'on souhaite procéder au démontage du balai d'essuie-glace, la partie supérieure formant crochet 102 est en saillie au-dessus de la surface externe de la paroi supérieure 34 de la chape 28.

Elle constitue alors un « bouton » de déverrouillage sur lequel l'utilisateur peut agir en le déplaçant longitudinalement d'arrière en avant à l'encontre de l'élasticité de la partie verticale de liaison 114a, 114b.

Pour faciliter cette action, la surface profilée convexe peut être crantée ou munie de tout état de surface particulier adapté.

Il est souhaitable d'éviter tout risque de séparation accidentelle entre le bras d'essuie-glace et le balai d'essuie-glace, et d'éviter ainsi une perte du balai d'essuie-glace, même en cas de fortes charges.

De telles fortes charges apparaissent notamment en utilisation de l'essuie-glace sur une surface vitrée recouverte de givre ou d'une couche importante de neige.

A cet effet, afin d'éviter tout risque de rupture sous charge de la patte de verrouillage 100, et notamment de sa partie supérieure libre formant crochet 102, la branche de verrouillage 106 est apte à se déformer élastiquement - sous l'action d'un effort qui lui est appliqué par la chape - par rapport à la branche verticale 104.

Comme on peut le voir à la figure 7, et grâce à une telle capacité de déformation élastique, la branche de verrouillage 106 est notamment apte à pivoter par rapport à la branche verticale 104, autour d'un axe transversal X-X.

L'axe transversal X-X est ici adjacent au bord d'extrémité arrière de la face inférieure de la face inférieure 108 et est sensiblement adjacent à la branche verticale 104.

Pour faciliter la déformation élastique de la branche de verrouillage 106 et ses mouvements de pivotement autour de l'axe transversal X-X, la partie en forme de crochet 102 comporte un évidement 122 qui est formé dans la zone de raccordement entre la branche verticale 104 et la branche de verrouillage 106.

L'évidement 122 est ici formé dans le prolongement de la face inférieure 108 de la branche de verrouillage 106.

L'évidement 122 est une rainure d'orientation transversale.

Comme cela est visible à grande échelle à la figure 7, la face inférieure 108 de la branche de verrouillage 106 est reliée à la rainure 122 par une arête transversale 124 qui est apte à coopérer avec la portion en vis-à-vis 35 de la surface externe de la paroi supérieure 34 de la chape 28.

La capacité de la branche de verrouillage à se déformer élastiquement sans rupture et à pivoter autour de l'axe transversal X-X est illustrée à la figure 7 sur laquelle la branche de verrouillage 106 est représentée en trait plein à son état libre non déformé, et en pointillés 106', 108', 112' dans un état déformé et pivoté dans le sens anti-horaire.

L'adaptateur 1026 selon le deuxième mode de réalisation présente une forme et une conception générale sensiblement similaires à celles de l'adaptateur 26 du premier mode de réalisation.

L'adaptateur 1026 comporte un corps principal arrière allongé 1025 qui est conformé pour être monté dans la chape 28.

En section par un plan vertical transversal, l'adaptateur 1026 a une forme sensiblement en U renversé. Il comporte deux parois latérales 1026a, 1026b verticales et longitudinales qui sont délimitées longitudinalement vers l'avant par un bord vertical 1027a, 1027b d'extrémité longitudinale avant et longitudinalement vers l'arrière par un bord vertical 1127a, 1127b d'extrémité longitudinale arrière.

Les deux parois latérales 1026a, 1026b sont reliées ensemble par une paroi supérieure horizontale 1026c.

Comme dans le premier mode de réalisation, le corps 1025 de l'adaptateur 1026 comporte une patte de verrouillage 100 configurée pour être reçue à travers un trou de la chape 28 qui est ici l'ouverture arrière 38b de contour sensiblement rectangulaire de la paroi supérieure 34 de la chape 28.

La patte de verrouillage 100 est reliée au corps 1025 de l'adaptateur 1026 par une branche verticale 104 qui est apte à se déformer élastiquement pour permettre un déplacement longitudinal - dans les deux sens - de la surface arrière de contact 110 par rapport au corps 1025 de l'adaptateur 1026.

A son extrémité longitudinale avant, le corps 1025 de l'adaptateur 1026 comporte aussi deux pattes de rétention 1062a, 1062b dont chacune s'étend longitudinalement vers l'avant dans le prolongement d'une paroi latérale 1026a, 1026b associée du corps 1025 de l'adaptateur 1026.

Les pattes de rétention 1062a et 1062b sont sensiblement parallèles. Elles ont chacune une forme générale parallélépipédique rectangle.

Chacune des pattes de rétention 1062a, 1062b comporte un chanfrein inférieur 1126a, 1126b qui est formé sur son bord inférieur.

Chaque patte de rétention 1062a, 1062b est conformée pour coopérer avec la chape 28 ou un composant porté par la chape 28. Les chanfreins 1126a, 1126b permettent de faciliter l'insertion de l'adaptateur 1026 dans la chape 28 ou un composant porté par la chape 28, tel que l'embout 44 comme représenté ici à titre d'exemple non limitatif.

Les pattes de rétention 1062a, 1062b permettent la rétention verticale de l'adaptateur 1026.

A titre non limitatif, à son extrémité longitudinale arrière, le corps 1025 de l'adaptateur 1026 comporte deux pattes de retenue 1063a, 1063b dont chacune s'étend longitudinalement vers l'arrière dans le prolongement d'une paroi latérale 1026a, 1026b associée du corps 1025 de l'adaptateur 1026.

Chaque patte de retenue 1063a, 1063b est conformée pour coopérer avec la chape 28 ou un composant porté par la chape 28.

Les pattes de retenue 1063a et 1063b sont sensiblement parallèles. Elles sont reliées par une traverse arrière 1128 transversale et horizontale.

Chacune des pattes de retenue 1063a, 1063b a une forme générale parallélépipédique rectangle, et s'étend verticalement sur une partie inférieure de la hauteur des parois latérales verticales associées 1026a et 1026b.

Les pattes de retenue 1063a, 1063b présente une extrémité arrière venant en butée sur la chape 28 ou un composant porté par la chape 28.

La traverse arrière 1128 s'étend horizontalement entre les deux pattes de retenue 1063a, 1063b. Elle relie les extrémités arrière des pattes de retenue 1063a, 1063b.

La largeur de la traverse arrière 1128 - mesurée selon la direction longitudinale - correspond à plus de la moitié de la longueur des pattes de retenue 1063a, 1063b.

La longueur des pattes de retenue 1063a, 1063b est dimensionnée de manière que l'extrémité arrière de chacune des pattes de retenue 1063a, 1063b vienne en butée avec la chape 28 ou un composant porté par la chape 28.

Les pattes de retenue 1063a, 1063b servent ainsi à la rétention longitudinale de l'adaptateur vers l'arrière. Elles permettent, notamment d'éviter la détérioration de la patte de verrouillage 100 dans l'hypothèse dans laquelle le balai est tiré longitudinalement vers l'arrière par rapport à la chape 28.

La traverse arrière 1128 permet de renforcer la rigidité de la partie d'extrémité arrière de l'adaptateur 1026, en particulier de renforcer la rigidité des pattes de retenue 1063a, 1063b.

A titre non limitatif, à son extrémité longitudinale avant, le corps 1025 de l'adaptateur 1026 comporte deux butées avant 1029a, 1029b de profil courbé ou incurvé convexe délimitant pour chacune de ces butées une surface incurvée convexe de butée 1130a, 1130b pour positionner longitudinalement l'adaptateur 1026 par rapport à la chape 28 ou un composant tel que l'embout 44 porté par la chape 28.

Chacune des butées 1029a, 1029b s'étend verticalement vers le bas en suivant une courbe dans le prolongement d'une paroi latérale 1026a, 1026b associée du corps 1025 de l'adaptateur 1026.

Chacune des butées courbées 1029a, 1029b est accolée latéralement à une face externe d'une patte de rétention associée 1062a, 1062b.

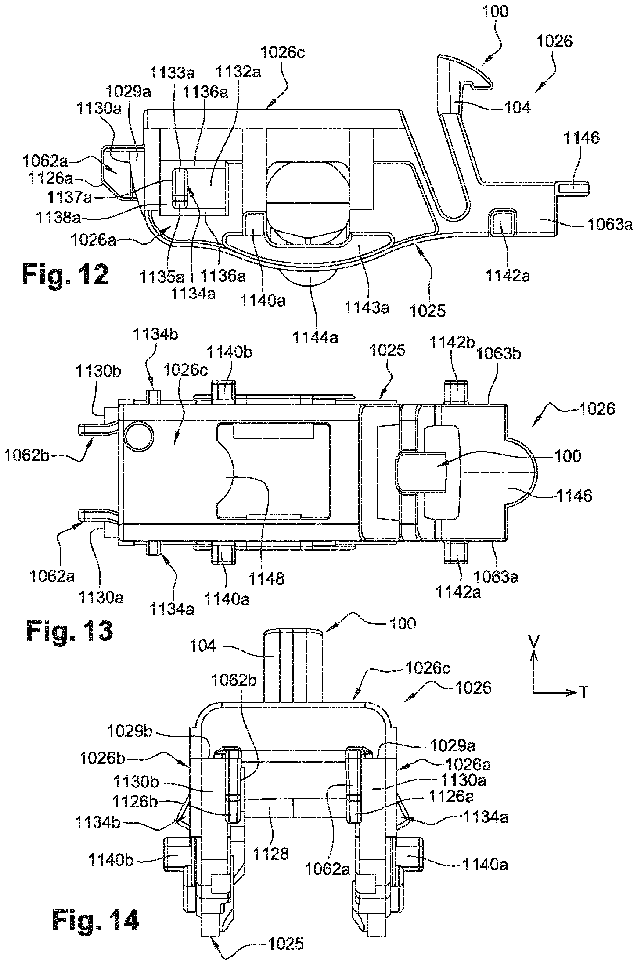

L'épaisseur longitudinale de chaque butée 1029a, 1029b diminue verticalement du haut vers le bas de manière à présenter un profil courbe convexe orienté vers l'avant (Voir figure 12).

Ainsi, la surface convexe de butée 1130a, 1130b présente un bord transversal supérieur qui est décalé longitudinalement vers l'avant par rapport à un bord transversal inférieur de la surface convexe de butée 1130a, 1130b.

Les butées incurvées convexes 1029a, 1029b permettent le positionnement longitudinal de l'adaptateur sur la chape 28 ou un composant porté par la chape 28, tel que l'embout 44.

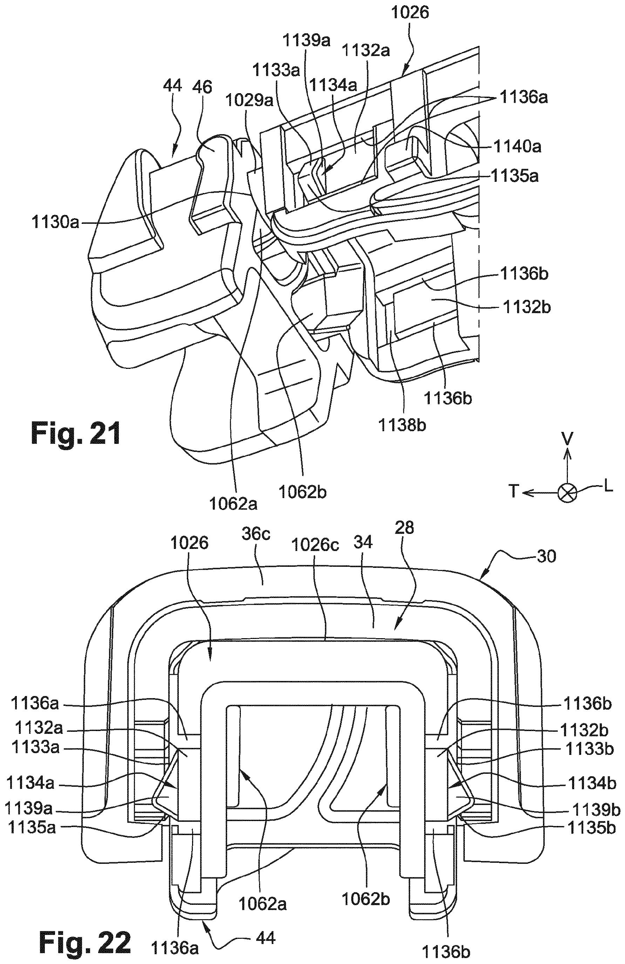

Lors de l'assemblage de l'adaptateur 1026 et de la chape 28 associée à l'embout 44, la surface convexe de butée 1130a, 1130b des butées courbées 1029a, 1029b vient en appui longitudinal sur une portion de la chape 28 ou de l'embout 44, en vis-à-vis (Voir figure 21). Le profil courbe des butées courbées 1029a, 1029b sert ainsi de guide d'assemblage permettant un pré-positionnement longitudinal de l'adaptateur 1026 dans la chape 28.

Ce pré-positionnement s'effectue progressivement et les surfaces convexes facilitent le mouvement de pivotement relatif de l'adaptateur par rapport à la chape lors de l'assemblage.

A titre non limitatif, chacune des parois latérales 1026a, 1026b comporte une patte élastiquement déformable selon la direction transversale, dite patte élastique 1132a, 1132b.

Les pattes élastiques 1132a, 1132b sont situées sur une partie ou portion avant des parois latérales 1026a, 1026b. Elles s'étendent sensiblement sur 20% à 50% de la longueur des parois latérales, voire de préférence de 25% à 35% de cette longueur.

Chacune des pattes élastiques 1132a, 1132b a une orientation générale longitudinale parallèle à la paroi supérieure 1026c, c'est-à-dire une orientation horizontale.

Chaque patte élastique 1132a, 1132b est délimitée par deux fentes parallèles horizontales 1136a, 1136b et une fente verticale perpendiculaire avant 1138a, 1138b reliant les deux fentes parallèles 1136a, 1136b. Les fentes sont traversantes et formées dans la paroi latérale 1026a, 1026b correspondante.

Dans une variante non représentée, on peut aussi envisager que les pattes élastiques aient une orientation générale verticale orthogonale à la paroi supérieure 1026c.

L'extrémité libre avant de chacune des pattes élastiques 1132a, 1132b comporte ici un ergot, ou dent, de retenue 1134a, 1134b longitudinale configuré pour coopérer avec la chape 28 et/ou un composant porté par la chape 28 et/ou le capot 30.

Les ergots de retenue 1134a, 1134b font saillie transversalement vers l'extérieur par rapport au plan de la patte élastique 1132a, 1132b associée.

Les ergots présentent un profil de came triangulaire avec une pente supérieure 1133a, 1133b, une pente inférieure 1135a, 1135b, une face avant 1137a, 1137b et une face arrière 1139a, 1139b.

La face avant 1137a, 1137b de chacun des ergots de retenue 1134a, 1134b vient en appui longitudinal sur la chape 28. Les ergots de retenue 1134a, 1134b permettent ainsi une sécurisation longitudinale vers l'avant de l'adaptateur 1026 par rapport à la chape 28.

La longueur de la pente supérieure 1133a, 1133b est supérieure à la longueur de la pente inférieure 1135a, 1135b.

La pente supérieure 1133a, 1133b des ergots de retenue 1134a, 1134b permet l'escamotage de chacune des pattes élastiques 1132a, 1132b pour le passage au niveau du rebord longitudinal 42a situé à l'avant du capot 30 lors de l'assemblage de l'adaptateur 1026 dans la chape 28.

La pente inférieure 1135a, 1135b des ergots de retenue 1134a, 1134b permet l'escamotage de chacune des pattes élastiques 1132a, 113b2 pour le passage au niveau du rebord longitudinal 42a situé à l'avant du capot 30 lors du démontage de l'adaptateur 1026.

Du fait de son élasticité et du profil triangulaire de leurs ergots de retenue 1134a, 1134b, les pattes élastiques 1132a, 1132b ne participent pas à une rétention verticale de l'adaptateur 1026 par rapport à la chape et/ou au capot 30. En revanche, les pattes élastiques 1132a, 1132b servent au positionnement longitudinal final de l'adaptateur 1026.

Dans une autre variante non représentée, le profil des ergots 1134a, 1134b peut être en forme de trapèze présentant une pente supérieure et une pente inférieure. Le fonctionnement des pattes élastiques est alors sensiblement similaire.

Les parois latérales 1026a, 1026b comprennent des plots 1140a, 1140b, 1142a, 1142b en saillie et configurés pour coopérer avec la chape 28 et/ou le capot 30. Les plots 1140a, 1140b, 1142a, 1142b font saillie transversalement vers l'extérieur et ont chacun une forme générale cubique.

Dans le deuxième mode de réalisation, chacune des parois latérales 1026a, 1026b comporte, à titre non limitatif, deux plots avant 1140a, 1140b, et deux plots arrière 1142a, 1142b.

Les plots avant 1140a, 1140b sont situés sur une partie avant des parois latérales 1026a, 1026b. Ils sont configurés pour coopérer avec le capot 30 et viennent en appui contre l'extrémité avant de l'encoche 42a du capot 30.

Les plots avant 1140a, 1140b garantissent que le capot 30 est en position fermée coulissée vers l'arrière par rapport à la chape 28 lors du montage de l'adaptateur 1026.

En effet, en position ouverte coulissée vers l'avant du capot 30, les rebords 42b du capot 30 se retrouvent sous l'emplacement destinés à recevoir les plots avant 1140a, 1140b empêchant le montage et l'assemblage de l'adaptateur 1026 dans la chape 28.

Les plots arrière 1142a, 1142b sont situés sur une partie arrière des parois latérales 1026a, 1026b. Dans le mode de réalisation représenté, les plots arrière 1142a, 1142b font saillie transversalement à partir des pattes de retenue 1063a, 1063b.

Les plots arrière 1142a, 1142b sont configurés pour coopérer avec la chape 28, notamment avec les encoches arrière 33d. Ils sont en butée contre le bord avant de l'encoche arrière 33d associée de manière à assurer une rétention longitudinale vers l'arrière de l'adaptateur 1026 par rapport à la chape 28.

Ainsi, les ergots de retenue 1134a, 1134b des pattes élastiques 1132a, 1132b et les plots avant 1140a, 1140b permettent une double "sécurisation" longitudinale vers l'avant de l'adaptateur 1026 par rapport à la chape, notamment sous effort(s) important(s).

Les plots arrière 1142a, 1142b sont aussi en appui légèrement vers le haut contre le bord supérieur horizontal des encoches arrière 33d.

Le bas des parois latérales 1026a, 1026b comporte une partie basse 1143a, 1143b présentant un contour arrondi convexe en arc de cercle.

Dans le deuxième mode de réalisation, cette partie basse 1143a, 1143b arrondie est formée avec une surépaisseur latérale externe en renforçant ainsi la rigidité de la partie inférieure des parois latérales 1026a, 1026b.

Cette surépaisseur permet une meilleure tenue à la torsion et à la déformation que pourrait subir l'adaptateur 1026 en cas de fortes charges qui peuvent apparaître en utilisation de l'essuie-glace sur une surface vitrée recouverte de givre ou d'une couche de neige.

En effet, une fois l'adaptateur 1026 monté sur le balai 12 d'essuie-glace, la partie inférieure de l'adaptateur 1026 est à l'air libre et elle peut subir des agressions du milieu extérieur, notamment en cas de conditions météorologiques difficiles, comme la neige ou le givre.

La partie basse 1143a, 1143b de l'adaptateur 1026 comporte de plus une excroissance 1144a, 1144b de forme arrondie.

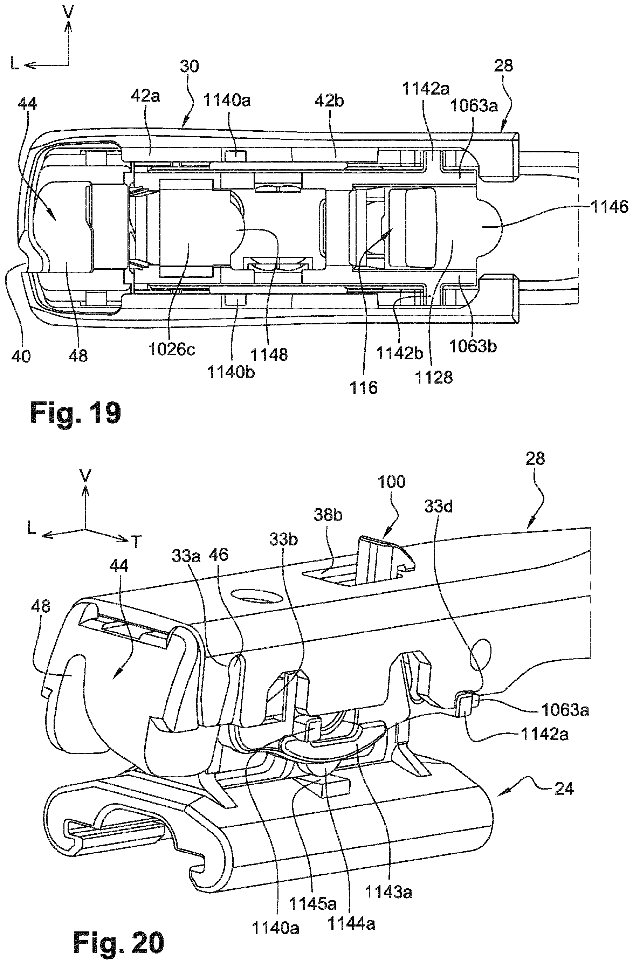

Comme on peut le voir à la figure 20, l'excroissance 1144a, (1144b) arrondie est en appui pivotant sur une facette latérale supérieure en vis-à-vis 1145a, (1145b) du connecteur 24 de manière à assurer la rétention verticale vers le bas de l'adaptateur 1026 par rapport au connecteur 24.

L'adaptateur 1026 comprend ici au moins une zone de préhension 1146 et 1148 pour le positionnement de ventouses pour la préhension de l'adaptateur 1026 par une machine lors de son montage en usine sur un balai 12 d'essuie-glace.

Par exemple, la traverse arrière 1128 présente une extension arrière 1146 horizontale correspondant à une première zone de préhension. L'extension arrière 1146 comprend un bord arrière arrondi permettant d'étendre la traverse arrière 1128 et faciliter le positionnement d'une ventouse de préhension (non représentée).

La paroi supérieure horizontale 1026c présente aussi une extension supérieure 1148 horizontale de bord arrière arrondi correspondant à une deuxième zone de préhension.

Dans une variante de réalisation non représentée, la paroi supérieure du corps de l'adaptateur peut comporter une languette déformable élastiquement configurée pour prendre appui contre la face interne de la paroi supérieure de la chape, afin de supprimer un jeu éventuel entre l'adaptateur et cette face interne.

Une telle languette de rattrapage de jeu est par exemple située au voisinage d'une extrémité longitudinale avant du corps, et la patte de verrouillage 100 est située à une extrémité longitudinale arrière opposée du corps.

Le montage et l'assemblage de l'adaptateur 1026 dans la chape 28 est similaire à celui décrit en référence au premier mode de réalisation.

Le montage de l'adaptateur 1026 se fait, et ne peut se faire, que lorsque le capot 30 est en position fermée coulissé vers l'arrière.

Dans un premier temps, les pattes de rétention 1062a, 1062b sont engagées dans les évidements complémentaires de l'embout 44 monté à l'extrémité libre avant de la chape 28 du bras. Leur engagement est facilité par la présence du chanfrein 1126a, 1126b.

On amène ensuite l'adaptateur 1026 dans la position illustrée à la figure 4 par un basculement vers le haut de l'adaptateur 1026.

Le basculement de l'adaptateur 1026 est facilité par les butées incurvées 1029a, 1029b qui prennent appui longitudinalement sur l'embout 44.

Lors du basculement ou pivotement, les ergots de retenue 1134a, 1134b des pattes élastiques 1132a, 1132b s'escamotent grâce à la pente supérieure 1133a, 1133b pour pouvoir assurer leur passage au niveau du rebord longitudinal 42a situé à l'avant du capot 30.

La face avant 1137a, 1137b des ergots de retenue 1134a, 1134b vient en appui sur la chape 28 en assurant une rétention longitudinale vers l'avant de l'adaptateur 1026.

Puis, les plots avant 1140a, 1140b passent au niveau des rebords 42a du capot 30 en garantissant que ce dernier est bien en position fermée.

Enfin, les plots arrière 1142a, 1142b s'insèrent dans les encoches arrière 33d et viennent en butée contre le bord avant des encoches arrières 33d de manière à assurer une rétention longitudinale vers l'arrière de l'adaptateur 1026.

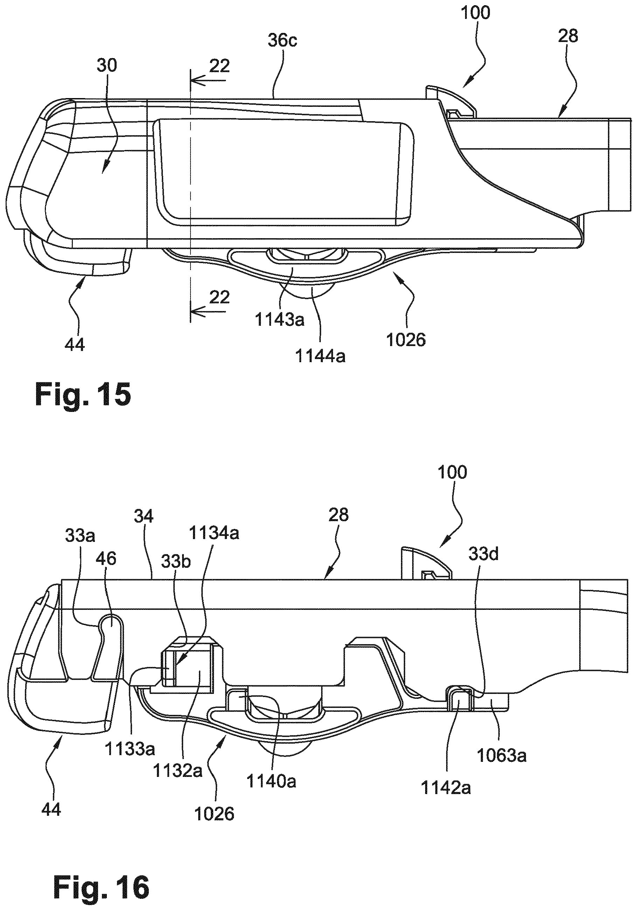

L'adaptateur est alors dans la position illustrée notamment aux figures 16 à 22.

Dans cette position, une portion de la surface profilée convexe 112 vient en contact avec le bord transversal arrière 39b de l'ouverture arrière 38b de la chape 28.

Le verrouillage de la patte de verrouillage 100 dans l'ouverture arrière 38b de la chape 28 se fait ensuite comme pour le premier mode de réalisation.

Pour démonter l'adaptateur 1026 du deuxième mode de réalisation du balai 12 d'essuie-glace, on procède de façon similaire au démontage de l'adaptateur 26 du premier mode de réalisation.

Une fois la patte de verrouillage 100 déverrouillée et sortie de l'ouverture arrière 38b, par basculement vers le bas de l'adaptateur 1026, les ergots de retenue 1134a, 1134b des pattes élastiques 1132a, 1132b s'escamotent grâce à la pente inférieure 1135a, 1135b pour pouvoir assurer leur passage au niveau du rebord longitudinal 42a situé à l'avant du capot 30.

L'adaptateur 1026 peut enfin être démonté complètement en désengageant les pattes de rétention 1062a, 1062b hors des évidements complémentaires de l'embout 44 de la chape 28 du bras.

## Revendications

1. Adaptateur (1026) pour un essuie-glace, notamment de véhicule automobile, comportant un corps (1025) de forme allongé longitudinalement qui est délimité par deux parois latérales longitudinales (1026a, 1026b) verticales opposées transversalement et reliées entre elles par une paroi supérieure horizontale (1026c) et qui est conformé pour être monté dans une chape complémentaire (28) à section en U renversé appartenant à un bras d'essuie-glace,
le corps (1025) de l'adaptateur (1026) comportant au moins une patte élastique (1132a, 1132b) qui est déformable selon la direction transversale de manière à s'escamoter lors de l'assemblage et/ou lors du démontage de l'adaptateur (1026) par rapport à la chape (28), la patte élastique (1132a, 1132b) étant portée par une paroi latérale (1026a, 1026b) du corps (1025) de l'adaptateur, **caractérisé en ce que** la patte élastique a une orientation générale longitudinale parallèle à la paroi supérieure (1026c).

2. Adaptateur (1026) selon la revendication 1, **caractérisé en ce que** la patte élastique porte un ergot (1134a, 1134b) de retenue longitudinale configuré pour coopérer avec la chape (28) et/ou un composant porté par la chape (28).

3. Adaptateur (1026) selon la revendication 2, **caractérisé en ce que** l'ergot (1134a, 1134b) de retenue présente un profil de came d'escamotage apte à coopérer avec la chape (28) et/ou un composant (30) porté par la chape (28), le profil de came étant de préférence un profil à deux pentes opposées (1133a, 1133b, 1135a, 1135b) de montage et de démontage respectivement.

4. Adaptateur (1026) selon l'une quelconque des revendications 1 à 3, **caractérisé en ce que** la patte élastique (1132a, 1132b) s'étend longitudinalement, et **en ce que** ledit ergot (1134a, 1134b) de retenue est formé à une extrémité libre avant de la patte élastique (1132a, 1132b).

5. Adaptateur (1026) selon l'une quelconque des revendications précédentes, **caractérisé en ce qu'**il comporte au moins un plot avant (1140a, 1140b) qui s'étend transversalement en saillie vers l'extérieur et qui est agencé sur une partie avant d'une paroi latérale (1026a, 1026b) du corps (1025), le plot avant (1140a, 1140b) étant configuré pour coopérer avec un composant porté par la chape (28) ou avec la chape (28) de manière à garantir que ce composant est dans une position longitudinale déterminée par rapport à la chape (28).

6. Adaptateur (1026) selon l'une quelconque des revendications précédentes, **caractérisé en ce qu'**il comporte au moins un plot arrière (1142a, 1142b) qui s'étend transversalement en saillie vers l'extérieur et qui est agencé sur une partie arrière d'une paroi latérale (1026a, 1026b) du corps (1025), le plot arrière (1042a, 1042b) étant configuré pour coopérer avec la chape (28) de manière à assurer une retenue longitudinale vers l'avant de l'adaptateur (1026) par rapport à la chape (28).

7. Adaptateur (1026) selon l'une quelconque des revendications précédentes, **caractérisé en ce que**, à son extrémité longitudinale avant, le corps (1025) de l'adaptateur (1026) comporte au moins une patte de rétention (1062a, 1062b) qui s'étend longitudinalement vers l'avant et qui est conformée pour coopérer avec la chape (28) ou un composant (44) porté par la chape (28), afin de retenir l'adaptateur (1026) par rapport à la chape, la au moins une patte de rétention (1062a, 1062b) comportant de préférence un chanfrein (1126a, 1126b) inférieur d'insertion de l'adaptateur (1026) dans une partie complémentaire de la chape (28) ou d'un composant (44) porté par la chape (28).

8. Adaptateur (1026) selon l'une quelconque des revendications précédentes, **caractérisé en ce que**, à son extrémité longitudinale avant, le corps (1025) de l'adaptateur (1026) comporte au moins une surface incurvée convexe de butée (1130a, 1130b) pour positionner longitudinalement l'adaptateur (1026) par rapport à la chape (28) ou un composant (44) porté par la chape (28).

9. Adaptateur (1026) selon la revendication 8, **caractérisé en ce que** la surface convexe de butée (1130a, 1130b) présente un bord transversal supérieur qui est décalé longitudinalement vers l'avant par rapport à un bord transversal inférieur de la surface convexe de butée (1130a, 1130b).

10. Adaptateur (1026) selon l'une quelconque des revendications 8 ou 9, **caractérisé en ce que** la surface convexe de butée (1130a, 1130b) est apte à venir en appui longitudinal contre une portion en vis-à-vis de la chape (28) ou d'un composant (44) porté par la chape (28) de manière à guider l'assemblage de l'adaptateur (1026) dans la chape (28) ou dans un composant porté par la chape (28).

11. Adaptateur (1026) selon l'une quelconque des revendications 8 à 10, **caractérisé en ce que** la surface convexe de butée (1130a, 1130b) est formée à une extrémité longitudinale avant d'une paroi latérale longitudinale (1026a, 1026b) du corps (1025) de l'adaptateur (1026).

12. Adaptateur (1026) selon l'une quelconque des revendications précédentes, **caractérisé en ce qu'**il comporte au moins une patte (1063a, 1063b) de retenue longitudinale du corps (1025) de l'adaptateur (1026) par rapport à la chape (28) ou un composant porté par la chape (28), qui s'étend longitudinalement vers l'arrière et qui est conformée pour coopérer avec la chape (28) ou un composant (30) porté par la chape (28).

13. Adaptateur (1026) selon l'une quelconque des revendications précédentes, **caractérisé en ce que** le corps (25) de l'adaptateur (26) comporte une patte de verrouillage (100) qui s'étend verticalement en saillie au-dessus de la face supérieure (29) du corps (25) ; qui est configurée pour être reçu à travers un trou (38b) de la chape ; qui porte une surface arrière (110) de contact avec un bord (39b) du trou (38b) de la chape ; et qui est reliée au corps (25) de l'adaptateur (26) par une partie verticale de liaison (114a, 114b) qui est apte à se déformer élastiquement pour permettre un déplacement longitudinal de la surface arrière de contact (110).

14. Ensemble comportant un bras d'essuie-glace et un adaptateur (1026) selon l'une quelconque des revendications 1 à 13, caractérisé en en ce que la chape (28) du bras d'essuie-glace est équipée d'un capot avant (30) qui recouvre la chape (28) et qui est ouvert verticalement vers le bas, le capot (30) étant de préférence monté coulissant longitudinalement sur la chape (28).

15. Balai d'essuie-glace (12) de véhicule automobile comprenant une lame d'essuyage (18) destinée à essuyer la vitre du véhicule et un ensemble de connexion destiné à connecter le balai à un bras d'entrainement (14), ledit ensemble de connexion comprenant au moins un adaptateur (1026) selon l'une quelconque des revendications 1 à 13.

## Patentansprüche

1. Adapter (1026) für einen Scheibenwischer, insbesondere eines Kraftfahrzeugs, der einen in Längsrichtung langgestreckten Körper (1025) aufweist, welcher von zwei vertikalen Längsseitenwänden (1026a, 1026b) begrenzt wird, die sich in Querrichtung gegenüberliegen und durch eine horizontale obere Wand (1026c) miteinander verbunden sind, und welcher dafür ausgebildet ist, in einem komplementären Gabelstück (28) mit umgekehrt U-förmigem Querschnitt angebracht zu werden, das zu einem Scheibenwischerarm gehört, wobei der Körper (1025) des Adapters (1026) wenigstens eine elastische Lasche (1132a, 1132b) aufweist, welche in der Querrichtung so verformbar ist, dass sie sich beim Zusammenbau und/oder beim Abbau des Adapters (1026) mit bzw. von dem Gabelstück (28) zurückbewegt, wobei die elastische Lasche (1132a, 1132b) von einer Seitenwand (1026a, 1026b) des Körpers (1025) des Adapters getragen wird,
**dadurch gekennzeichnet, dass** die elastische Lasche im Wesentlichen eine zu der oberen Wand (1026c) parallele Längsausrichtung aufweist.

2. Adapter (1026) nach Anspruch 1, **dadurch gekennzeichnet, dass** die elastische Lasche einen Ansatz (1134a, 1134b) zum Halten in Längsrichtung trägt, der dafür ausgelegt ist, mit dem Gabelstück (28) und/oder einem von dem Gabelstück (28) getragenen Bauteil zusammenzuwirken.

3. Adapter (1026) nach Anspruch 2, **dadurch gekennzeichnet, dass** der Rückhalteansatz (1134a, 1134b) ein Einzieh-Nockenprofil aufweist, das geeignet ist, mit dem Gabelstück (28) und/oder einem von dem Gabelstück (28) getragenen Bauteil (30) zusammenzuwirken, wobei das Nockenprofil vorzugsweise ein Profil mit zwei entgegengesetzten Neigungen (1133a, 1133b, 1135a, 1135b) zum Anbau bzw. Abbau ist.

4. Adapter (1026) nach einem der Ansprüche 1 bis 3, **dadurch gekennzeichnet, dass** sich die elastische Lasche (1132a, 1132b) in Längsrichtung erstreckt, und dadurch, dass der Rückhaltenocken (1134a, 1134b) an einem vorderen freien Ende der elastischen Lasche (1132a, 1132b) ausgebildet ist.

5. Adapter (1026) nach einem der vorhergehenden Ansprüche, **dadurch gekennzeichnet, dass** er wenigstens einen vorderen Zapfen (1140a, 1140b) aufweist, welcher sich in Querrichtung nach außen vorstehend erstreckt und welcher an einem vorderen Teil einer Seitenwand (1026a, 1026b) des Körpers (1025) angeordnet ist, wobei der vordere Zapfen (1140a, 1140b) dafür ausgelegt ist, mit einem von dem Gabelstück (28) getragenen Bauteil oder mit der Gabelstück (28) so zusammenzuwirken, dass garantiert wird, dass sich dieses Bauteil in einer bestimmten Längsposition bezüglich des Gabelstücks (28) befindet.

6. Adapter (1026) nach einem der vorhergehenden Ansprüche, **dadurch gekennzeichnet, dass** er wenigstens einen hinteren Zapfen (1142a, 1142b) aufweist, welcher sich in Querrichtung nach außen vorstehend erstreckt und welcher an einem hinteren Teil einer Seitenwand (1026a, 1026b) des Körpers (1025) angeordnet ist, wobei der hintere Zapfen (1042a, 1042b) dafür ausgelegt ist, mit dem Gabelstück (28) so zusammenzuwirken, dass ein Rückhalt des Adapters (1026) in Längsrichtung nach vorn bezüglich des Gabelstücks (28) sichergestellt wird.

7. Adapter (1026) nach einem der vorhergehenden Ansprüche, **dadurch gekennzeichnet, dass** der Körper (1025) des Adapters (1026) an seinem vorderen Längsende wenigstens eine Rückhaltelasche (1062a, 1062b) aufweist, welche sich in Längsrichtung nach vorn erstreckt und welche dafür ausgebildet ist, mit dem Gabelstück (28) oder einem von dem Gabelstück (28) getragenen Bauteil (44) zusammenzuwirken, um den Adapter (1026) bezüglich des Gabelstücks zu halten, wobei die wenigstens eine Rückhaltelasche (1062a, 1062b) vorzugsweise eine untere Abschrägung (1126a, 1126b) zum Einsetzen des Adapters (1026) in einen komplementären Teil des Gabelstücks (28) oder eines von dem Gabelstück (28) getragenen Bauteils (44) aufweist.

8. Adapter (1026) nach einem der vorhergehenden Ansprüche, **dadurch gekennzeichnet, dass** der Körper (1025) des Adapters (1026) an seinem vorderen Längsende wenigstens eine konvexe gekrümmte Anschlagfläche (1130a, 1130b) zum Positionieren des Adapters (1026) in Längsrichtung bezüglich des Gabelstücks (28) oder eines von dem Gabelstück (28) getragenen Bauteils (44) aufweist.

9. Adapter (1026) nach Anspruch 8, **dadurch gekennzeichnet, dass** die konvexe Anschlagfläche (1130a, 1130b) einen oberen Querrand aufweist, welcher bezüglich eines unteren Querrandes der konvexen Anschlagfläche (1130a, 1130b) in Längsrichtung nach vorn versetzt ist.

10. Adapter (1026) nach einem der Ansprüche 8 oder 9, **dadurch gekennzeichnet, dass** die konvexe Anschlagfläche (1130a, 1130b) geeignet ist, an einem gegenüberliegenden Abschnitt des Gabelstücks (28) oder eines von dem Gabelstück (28) getragenen Bauteils (44) in Längsrichtung zur Anlage zu kommen, um beim Zusammenbau den Adapter (1026) in dem Gabelstück (28) oder in einem von dem Gabelstück (28) getragenen Bauteil zu führen.

11. Adapter (1026) nach einem der Ansprüche 8 bis 10, **dadurch gekennzeichnet, dass** die konvexe Anschlagfläche (1130a, 1130b) an einem vorderen Längsende einer Längsseitenwand (1026a, 1026b) des Körpers (1025) des Adapters (1026) ausgebildet ist.

12. Adapter (1026) nach einem der vorhergehenden Ansprüche, **dadurch gekennzeichnet, dass** er wenigstens eine Lasche (1063a, 1063b) zum Halten des Körpers (1025) des Adapters (1026) in Längsrichtung bezüglich des Gabelstücks (28) oder eines von dem Gabelstück (28) getragenen Bauteils aufweist, welche sich in Längsrichtung nach hinten erstreckt und welche dafür ausgebildet ist, mit dem Gabelstück (28) oder einem von dem Gabelstück (28) getragenen Bauteil (30) zusammenzuwirken.

13. Adapter (1026) nach einem der vorhergehenden Ansprüche, **dadurch gekennzeichnet, dass** der Körper (25) des Adapters (26) eine Verriegelungslasche (100) aufweist, welche sich über der Oberseite (29) des Körpers (25) vertikal vorstehend erstreckt; welche dafür ausgelegt ist, durch ein Loch (38b) des Gabelstücks hindurch aufgenommen zu werden; welche eine hintere Fläche (110) für den Kontakt mit einem Rand (39b) des Loches (38b) des Gabelstücks trägt; und welche mit dem Körper (25) des Adapters (26) durch einen vertikalen Verbindungsteil (114a, 114b) verbunden ist, welcher in der Lage ist, sich elastisch zu verformen, um eine Längsverschiebung der hinteren Kontaktfläche (110) zu ermöglichen.

14. Anordnung, welche einen Scheibenwischerarm und einen Adapter (1026) nach einem der Ansprüche 1 bis 13 umfasst, **dadurch gekennzeichnet, dass** das Gabelstück (28) des Scheibenwischerarmes mit einer vorderen Kappe (30) ausgestattet ist, welche das Gabelstück (28) bedeckt und welche vertikal nach unten offen ist, wobei die Kappe (30) vorzugsweise in Längsrichtung gleitend auf dem Gabelstück (28) angebracht ist.

15. Scheibenwischerblatt (12) eines Kraftfahrzeugs, welches einen Wischergummi (18), der dazu bestimmt ist, die Fensterscheibe des Fahrzeugs zu wischen, und eine Verbindungsanordnung, die dazu bestimmt ist, das Wischerblatt mit einem Antriebsarm (14) zu verbinden, umfasst, wobei die Verbindungsanordnung wenigstens einen Adapter (1026) nach einem der Ansprüche 1 bis 13 umfasst.

## Claims

1. Adapter (1026) for a wiper, notably for a motor vehicle, comprising a body (1025) of longitudinally elongate shape which is delimited by two vertical longitudinal lateral walls (1026a, 1026b) which are transversely opposite and joined together by a horizontal upper wall (1026c), and which is shaped to be mounted in a complementary yoke (28) of inverted U-shaped cross section belonging to a wiper arm, the body (1025) of the adapter (1026) compriseing at least one elastic tab (1132a, 1132b) which is deformable in the transverse direction so as to retract as the adapter (1026) is being assembled and/or dismantled with respect to the yoke (28), the elastic tab (1132a, 1132b) being borne by a lateral wall (1026a, 1026b) of the body (1025) of the adapter, **characterized in that** the elastic tab has a general longitudinal direction parallel to the horizontal upper wall (1026c).

2. Adapter (1026) according to Claim 1, **characterized in that** the elastic tab bears a longitudinal retention lug (1134a, 1134b) configured to collaborate with the yoke (28) and/or a component borne by the yoke (28).

3. Adapter (1026) according to Claim 2, **characterized in that** the retention lug (1134a, 1134b) has a retractable cam profile able to collaborate with the yoke (28) and/or a component (30) borne by the yoke (28), the cam profile preferably being a profile having two opposite slopes (1133a, 1133b, 1135a, 1135b) for mounting and dismantling respectively.

4. Adapter (1026) according to any one of Claims 1 to 3, **characterized in that** the elastic tab (1132a, 1132b) extends longitudinally, and **in that** the said retention lug (1134a, 1134b) is formed at a front free end of the elastic tab (1132a, 1132b).

5. Adapter (1026) according to any one of the preceding claims, **characterized in that** it comprises at least one front stud (1140a, 1140b) which extends transversely projecting outwards and which is arranged on a front part of a lateral wall (1026a, 1026b) of the body (1025), the front stud (1140a, 1140b) being configured to collaborate with a component borne by the yoke (28) or with the yoke (28) so as to guarantee that this component is in a determined longitudinal position with respect to the yoke (28).

6. Adapter (1026) according to any one of the preceding claims, **characterized in that** it comprises at least one rear stud (1142a, 1142b) which extends transversely projecting outwards and which is arranged on a rear part of a lateral wall (1026a, 1026b) of the body (1025), the rear stud (1042a, 1042b) being configured to collaborate with the yoke (28) so as to provide longitudinal retention of the adapter (1026) in the forward direction with respect to the yoke (28).

7. Adapter (1026) according to any one of the preceding claims, **characterized in that**, at its front longitudinal end, the body (1025) of the adapter (1026) comprises at least one retention tab (1062a, 1062b) which extends longitudinally forwards and which is shaped to collaborate with the yoke (28) or a component (44) borne by the yoke (28), so as to retain the adapter (1026) with respect to the yoke, the at least one retention tab (1062a, 1062b) preferably comprising a lower chamfer (1126a, 1126b) for the insertion of the adapter (1026) in a complementary part of the yoke (28) or of a component (44) borne by the yoke (28).

8. Adapter (1026) according to any one of the preceding claims, **characterized in that**, at its front longitudinal end, the body (1025) of the adapter (1026) comprises at least one convex curved stop surface (1130a, 1130b) for longitudinally positioning the adapter (1026) with respect to the yoke (28) or a component (44) borne by the yoke (28).

9. Adapter (1026) according to Claim 8, **characterized in that** the convex stop surface (1130a, 1130b) has an upper transverse edge which is longitudinally offset forwards with respect to a lower transverse edge of the convex stop surface (1130a, 1130b).

10. Adapter (1026) according to either one of Claims 8 and 9, **characterized in that** the convex stop surface (1130a, 1130b) is able to come to bear longitudinally against an opposing portion of the yoke (28) or of a component (44) borne by the yoke (28) so as to guide the assembly of the adapter (1026) in the yoke (28) or in a component borne by the yoke (28).

11. Adapter (1026) according to any one of Claims 8 to 10, **characterized in that** the convex stop surface (1130a, 1130b) is formed at a front longitudinal end of a longitudinal lateral wall (1026a, 1026b) of the body (1025) of the adapter (1026).

12. Adapter (1026) according to any one of the preceding claims, **characterized in that** it comprises at least one tab (1063a, 1063b) for longitudinal retention of the body (1025) of the adapter (1026) with respect to the yoke (28) or a component borne by the yoke (28), which extends longitudinally rearwards and which is shaped to collaborate with the yoke (28) or a component (30) borne by the yoke (28).

13. Adapter (1026) according to any one of the preceding claims, **characterized in that** the body (25) of the adapter (26) comprises a locking tab (100) which extends vertically projecting above the upper face (29) of the body (25); which is configured to be received through a hole (38b) in the yoke; which bears a rear contact surface (110) for contact with an edge (39b) of the hole (38b) in the yoke; and which is connected to the body (25) of the adapter (26) by a vertical connecting part (114a, 114b) which is able to deform elastically so as to allow a longitudinal movement of the rear contact surface (110).

14. Assembly comprising a wiper arm and an adapter (1026) according to any one of Claims 1 to 13, **characterized in that** the yoke (28) of the wiper arm is equipped with a front cap (30) which covers the yoke (28) and is opened vertically downwards, the cap (30) preferably being mounted with the ability to slide longitudinally on the yoke (28).

15. Motor vehicle wiper (12) comprising a wiper blade (18) intended to wipe the window of the vehicle and a connection assembly intended to connect the wiper to a drive arm (14), the said connection assembly comprising at least one adapter (1026) according to any one of Claims 1 to 13.
